# EUROPEAN PATENT SPECIFICATION

(11) **EP 2 292 986 B1**
(45) Date of publication and mention of the grant of the patent: **14.06.2017**
(21) Application number: 10001905.8
(22) Date of filing: 24.02.2010
(51) Int. Cl.: F24F 11/00

(54) **Energy saving apparatus and air conditioner**
Energiesparvorrichtung und Klimaanlage
Appareil d'économie d'énergie et climatiseur

(30) Priority: 23.07.2009 JP 2009172092
(43) Date of publication of application: 09.03.2011
(73) Proprietor: Mitsubishi Electric Corporation, Tokyo 100-8310 (JP)
(72) Inventor: Yano, Hirotoshi, Tokyo 100-8310 (JP); Matsumoto, Takashi, Tokyo 100-8310 (JP); Funayama, Isao, Tokyo 100-8310 (JP); Mochizuki, Shoji, Tokyo 100-8310 (JP); Hirano, Makoto, Tokyo 100-8310 (JP)
(74) Representative: Pfenning, Meinig & Partner mbB

(56) References cited:
- JP-A- 2000 274 778
- JP-A- 2003 271 812
- JP-A- 2009 121 718
- US-A- 6 145 328

## Description

### CROSS-REFERENCE TO RELATED APPLICATIONS

The present application claims priority from Japanese Patent Application No. 2009-172092, which was filed on July 23, 2009, the disclosure of which is herein incorporated by reference in its entirety.

### TECHNICAL FIELD

The present invention relates to an energy saving apparatus, such as an air conditioner, which has energy saving functions, and particularly, to a function to advise a suitable user action from a viewpoint of energy savings to a user of the energy saving apparatus.

### BACKGROUND

Known from the prior art (JP 2000-274778 A) is the following:

An energy management apparatus comprises a comfort index calculator for calculating a plurality of comfort indexes from measured results of indoor sensors, a resident state input to input means, and a plurality of set operation mode candidates held by set operation mode memories, facility load calculators for calculating a plurality of facility loads from measured results of atmospheric sensors, a measured result of an indoor load sensor, characteristics of a structure input to a structure characteristic input means, and a plurality of set operation mode candidates held by set operation mode memories, a cost calculator for calculating a plurality of facility operation costs corresponding to the plurality of the loads, a display unit for displaying a plurality of the indexes and a plurality of the costs, and set operation mode selectors for selecting the set operation modes based on the display.

There has been proposed a related-art energy saving apparatus including energy saving functions. One related-art energy saving apparatus is an air conditioner performing an energy saving operation by automatic control on the basis of information acquired by a temperature sensor etc., or presenting to a user energy saving temperature settings from external air temperature information acquired by the temperature sensor so as to give an advice on energy saving to the user (see Japanese Utility Model Registration No. 1600153 and Japanese Patent No. 3323811). Another related art is an air conditioner that performs operation control, such as shutting down the air conditioner, to keep the electric power charge within budgeted amount by using an electric power charge calculating device that calculates the electric power charge and an electric power charge budget storage device that stores an electric power charge budget as a usage upper limit (for example, JP-A-2003-83588).

The related-art energy saving advice merely presents an energy saving advice to the user in the energy saving operational control. Thus, it is unclear to the user how much energy saving effect is obtained if the user has followed the energy saving advice. Additionally, as mentioned above, there is also a function to perform setting of a usage upper limit in an electric power charge, etc. However, it is unclear to the user how much margin over the usage upper limit is left at present. Additionally, there is also a problem in that a user cannot confirm how much energy can be consequently saved if the user has acted according to energy saving advice, and it is difficult to realize an energy saving effect.

Accordingly, an exemplary embodiment of the present invention provides an energy saving apparatus having energy saving functions, capable of giving energy saving advice in such a manner that a user can understand an energy saving effect, evaluating an energy saving action of the user, thereby understanding actual energy saving results, and presenting the result of the evaluation to the user.

### SUMMARY

An energy saving apparatus according to an exemplary embodiment of the present invention comprises: a sensor which measures sensor information, a sensor information input device which inputs the sensor information, a setting input device which inputs setting information, an advice creating device which creates energy saving advice based on the sensor information and the setting information, an advice notification device which notifies the energy saving advice to a user, an action verifying device which detects whether or not a user made an energy saving action based on the energy saving advice, based on the sensor information, an action result evaluating device which calculates an energy saving evaluation value from the energy saving action detected by the action verifying device, and a result evaluation notification device which notifies the energy saving evaluation value to the user.

### BRIEF DESCRIPTIONS OF THE DRAWINGS

Fig. 1 is a view showing a configuration of an energy saving apparatus in Embodiment 1;
Fig. 2 is a view showing a configuration of an indoor device of the energy saving apparatus in Embodiment 1;
Fig. 3 is a view showing an operation flow of a whole operation of energy saving advice functions of the energy saving apparatus in Embodiment 1;
Fig. 4 is another view showing a operation flow of specific operation of the energy saving advice functions of the energy saving apparatus in Embodiment 1;
Fig. 5 is a view showing temperature transition illustrating the operation of the energy saving advice functions in Embodiment 1;
Fig. 6A shows a display example of a display unit of the indoor device, and Fig. 6B shows a display example of a remote control display unit in Embodiment 1;
Fig. 7 shows a display example of a graphical display displayed on the remote control display unit in Embodiment 1;
Fig. 8 is a view showing an example of status of use of the energy saving apparatus in Embodiment 2;
Fig. 9 is a view showing an operation flow of an operation of an opening/closing state detecting function of a door or a window in Embodiment 2;
Fig. 10 is another view showing an operation flow of an operation of energy saving advice functions of the energy saving apparatus in Embodiment 2;
Fig. 11 is a view showing an example of status of use of the energy saving apparatus in Embodiment 3;
Fig. 12 is a view showing an example of measurement of a heat pixel image by an infrared sensor in Embodiment 3;
Fig. 13 is an operation flow diagram showing an operation of group seating advice as an energy saving advice function of the energy saving apparatus in Embodiment 3;
Fig. 14 is an operation flow diagram showing an operation of movement advice as an energy saving advice function of the energy saving apparatus in Embodiment 3;
Fig. 15 is an operation flow diagram showing an operation of amount of activity lowering advice as an energy saving advice function of the energy saving apparatus in Embodiment 3;
Fig. 16 is an operation flow diagram showing an operation of maintenance advice as an energy saving advice function of an energy saving apparatus in Embodiment 4;
Fig. 17 is an operation flow diagram showing the operation of window opening advice as an energy saving advice function of an energy saving apparatus in Embodiment 5;
Fig. 18 is an operation flow diagram showing an operation of an energy saving advice function of an energy saving apparatus in Embodiment 6;
Fig. 19 shows a display example showing energy saving prediction of the energy saving apparatus in Embodiment 6;
Fig. 20 is an operation flow diagram showing the operation of air-conditioning ON advice as an energy saving advice function of an energy saving apparatus in Embodiment 7;
Fig. 21 is an operation flow diagram showing an operation of a count-down function in Embodiment 8;
Fig. 22 is an operation flow diagram showing an operation of count-down of an energy saving apparatus in Embodiment 8; and
Fig. 23 is a view showing a system configuration in Embodiment 9.

### DETAILED DESCRIPTION OF EXEMPLARY EMBODIMENTS

### Embodiment 1

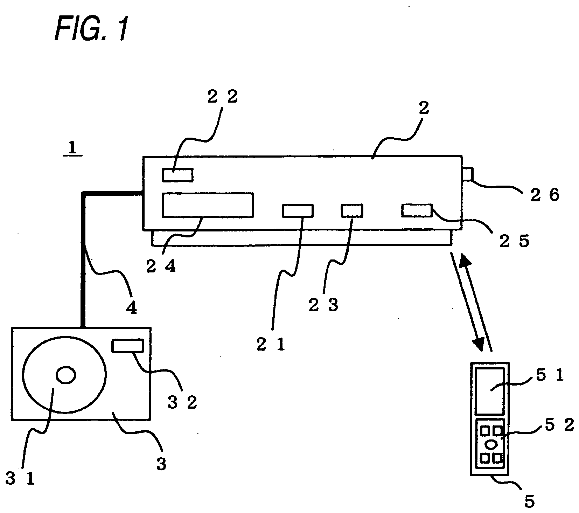

Energy saving advice functions of an energy saving apparatus in Embodiment 1 will be described with reference to the drawings. An air conditioner 1 is one example of the energy saving apparatus. The overall configuration of the air conditioner 1 is shown in Fig. 1. The air conditioner 1 includes an indoor device 2 that is installed indoors, an outdoor device 3 that is installed outdoors, piping 4 connecting the indoor device 2 and the outdoor device 3, and a remote control 5 which performs communication with the indoor device 2. The communication between the remote control 5 and the indoor device 2 performs bidirectional communication using electromagnetic waves such as infrared rays. The indoor device 2 includes an infrared sensor 21, an indoor temperature sensor 22, a camera 23, a display unit 24, a remote control communication unit 25 and an external sensor interface unit 26 (referred to as an external sensor I/F unit 26) other than normal functions required as a facility in an air-conditioned room. The display unit 24 has functions to display character/figure information notifications to a user or to make an LED provided within the display unit 24 turned on/off. The outdoor device 3 includes an outdoor fan 31, an outdoor temperature sensor 32 and normal functions required as a facility outside the air-conditioned room. The remote control 5 has a remote control display unit 51 that displays character/figure information and a remote control operation unit 52 that allows the user to operate the air conditioner 1.

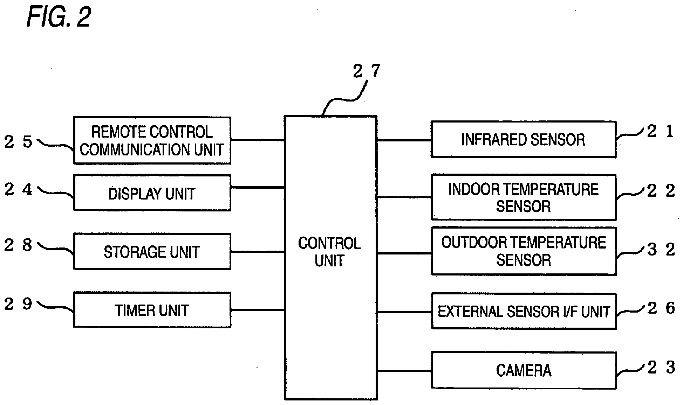

Fig. 2 is a view showing the configuration of the indoor device 2. The indoor device 2 includes a control unit 27 that controls the operation of the whole air conditioner 1. The control unit 27 is configured by a microcomputer, etc. The control unit 27 inputs sensor information measured by individual sensors from the infrared sensor 21, the indoor temperature sensor 22, the outdoor temperature sensor 32 and the external sensor I/F unit 26. The control unit 27 inputs a camera image from the camera 23. The control unit 27 performs bidirectional communication with the remote control 5 via the remote control communication unit 25. A storage unit 28 that stores parameters, setting information, etc. for executing various functions, such as an energy saving evaluation value (energy saving point) (which will be described later) and a timer unit 29 that executes various timer functions used by the operation control of the air conditioner 1 are connected to the control unit 27.

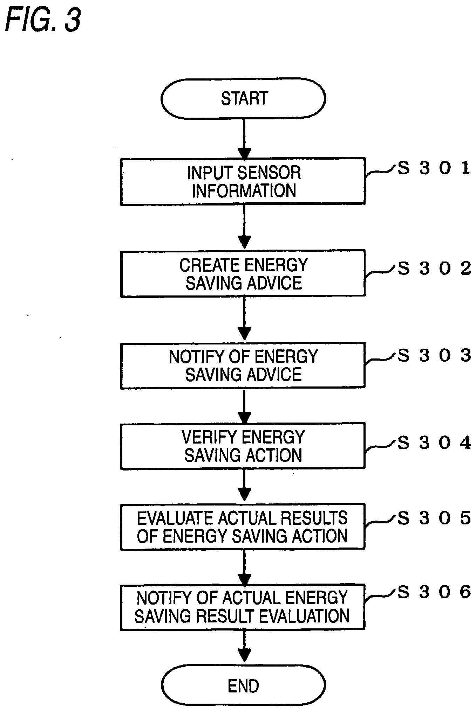

The flow of the whole processing of energy saving advice functions in Embodiment 1 will be described. Fig. 3 is view showing the whole processing flow. First, the control unit 27 inputs sensor information from the infrared sensor 21, etc. (S301). Next, the control unit 27 creates energy saving advice contents based on the sensor information and user setting (for example, cooling setting temperature, wind speed, etc.) (S302). The created energy saving advice is displayed using figures, characters, etc. on the display unit 24 installed in the indoor device 2. Additionally, the energy saving advice is transmitted to the remote control 5 via the remote control communication unit 25, and also displayed on the remote control display unit 51 (S303). Incidentally, only LED display may be performed on the display unit 24, and specific advice contents may be displayed on the remote control display unit 51. The user of the air conditioner 1 can perform an energy saving action by reading the energy saving advice displayed on the display unit 24 or the remote control display unit 51.

The control unit 27 verifies existence/non-existence of the energy saving action of the user on the basis of changes in measurement values from the infrared sensor 21, etc., and the change history of user settings (S304). The control unit 27 performs actual-result evaluation of the energy saving action on the basis of the energy saving action of the user (S305). The control unit 27 displays the result of the actual-result evaluation of the energy saving action on the display unit 24 or the remote control display unit 51 (S306). As the user reads the result of the actual-result evaluation displayed on the display unit 24 or the remote control display unit 51, the user can understand the energy saving effect by his/her energy saving action. Energy saving advice functions are executed by repeating the above-described processing of S301 to S306.

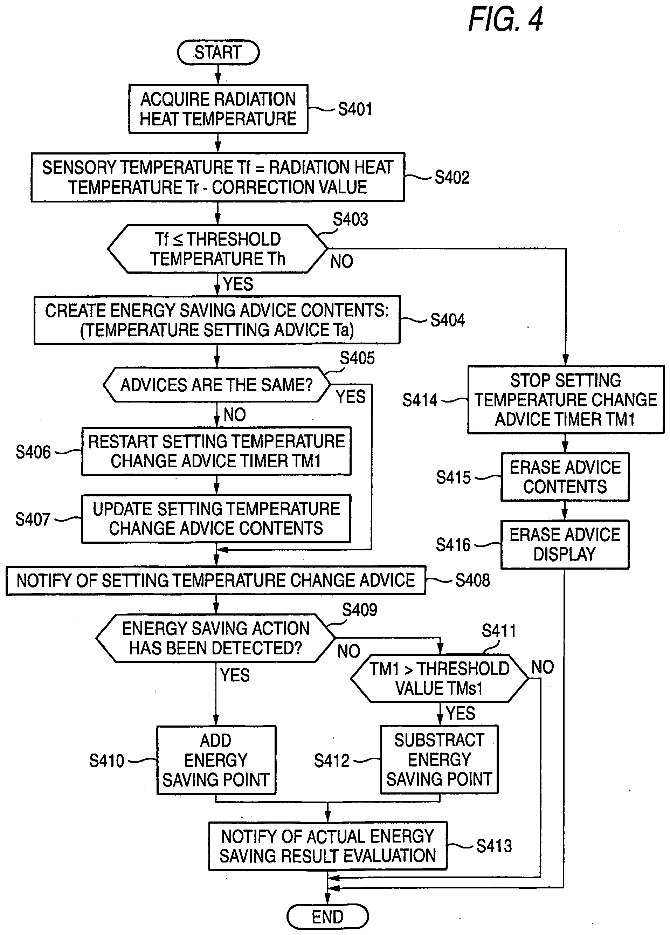

Next, the specific operation of the energy saving advice functions will be described on the basis on the operation flow of Fig. 4, taking a case where an infrared sensor is used as the sensor as an example. The operation flow shows a case where the air conditioner 1 performs cooling operation.

First, the infrared sensor 21 detects the radiation heat temperature of an indoor space where the air conditioner 1 is installed, and the control unit 27 acquires the indoor radiation heat temperature data detected by the infrared sensor 21 (S401). Next, the control unit 27 calculates a sensory temperature Tf (Tf = indoor radiation heat temperature Tr - correction value) of a person from the indoor radiation heat temperature input from the infrared sensor 21 and a correction value (S402). Here, the correction value is parameter data stored in the storage unit 28 and is a value determined taking account of an indoor environment where the air conditioner 1 is installed. The correction value may be a value which is preset when the air conditioner is installed, or may be a value which is readjusted according to changes in environmental conditions after the installation.

Next, the sensory temperature Tf is compared with a threshold temperature Th (S403). Here, the threshold temperature Th is a value which is preset in the storage unit 28, and is desirably set to, for example, 27.5°C that is slightly lower than 28°C, that is the government recommended temperature during cooling. If the sensory temperature Tf is equal to or lower than the threshold temperature Th, it is determined that the sensory temperature has sufficiently fallen, and a temperature setting advice Ta is set to a value which is higher than a current user setting temperature Tu. For example, as Ta = Tu + 1, a temperature that is 1°C higher than the current user setting temperature is desirably set to a temperature setting advice Ta. Then, "Recommend a setting change to the temperature setting advice Ta" is adopted as energy saving advice contents (S404).

Next, the control unit 27 compares currently notified advice contents stored in the storage unit 28 with the advice contents created in the processing of S404 (S405). If both of the advice contents do not coincide with each other, a value of a setting change advice timer TM1 included in the timer unit 29 is initialized by resetting to zero, and the timer is restarted (S406). Additionally, the advice contents during display which are stored in the storage unit 28 are updated by the advice contents at this time (S407). In contrast, if the currently notified advice contents and the advice contents created in the processing of S404 coincide with each other, the processing proceeds to the notification of the energy saving advice (s408).

Next, the control unit 27 notifies the user of the created energy saving advice (S408). User notification is presented by turning on/off the LED of the display unit 24 and transmitting the temperature setting advice that is advice contents to the remote control 5. As the remote control 5 displays notification contents on the remote control display unit 51, the user can confirm the energy saving advice contents.

Next, the control unit 27 performs verification of the energy saving action of the user and determines whether or not the user makes an energy saving action based on the energy saving advice (S409). For example, as for energy saving advice "Recommend temperature setting advice Ta", it is determined that the energy saving advice has been executed when the user has changed setting temperature to the temperature setting advice Ta using the remote control 5. If the user has executed the energy saving advice, a certain point is added to an energy saving point stored in the storage unit 28 (S410). Here, the energy saving point is obtained by cumulatively counting a number of times that the energy saving advice has been executed, and the energy saving point is an evaluation point for the energy saving actions of the user. If it is determined that the user is not executing the energy saving advice, it is investigated whether or not the value of the setting change advice timer TM1 of the timer unit 29 is greater than the threshold value TMs1 (S411). If TM1>TMs1, i.e., if the advice has not been executed although a predetermined time has lapsed, a certain point is subtracted from the energy saving point stored in the storage unit 28 (S412). If TM1 ≤ TMs1, the energy saving point is not updated.

Next, if the energy saving point has been changed by addition or subtraction, the control unit 27 notifies the verification result of the energy saving action to the user (S413). The user notification is presented by the same procedure as the notification of the energy saving advice in S408. In this way, the user can confirm the verification result of the energy saving action. In addition, the notification method to the user is also possible by methods other than using the energy saving point. For example, the remote control 5 may include an LED, and when energy saving advice notification is received, the LED may be turned on and off to invite a user's attention. Additionally, the display unit 24 may display the energy saving advice contents. Additionally, the indoor treatment 2 or remote control 5 may include a speaker in order to make the notification by a sound or a voice.

In S403, if the sensory temperature Tf is greater than the threshold temperature Th, it is determined that the energy saving advice is unnecessary. Then, the setting change advice timer TM1 is stopped (S414). Then, if there is advice during display, the advice contents during display stored in the storage unit 28 are erased (S415). Then, the advice displayed on the display unit 24 or the remote control display unit 51 is erased (S416).

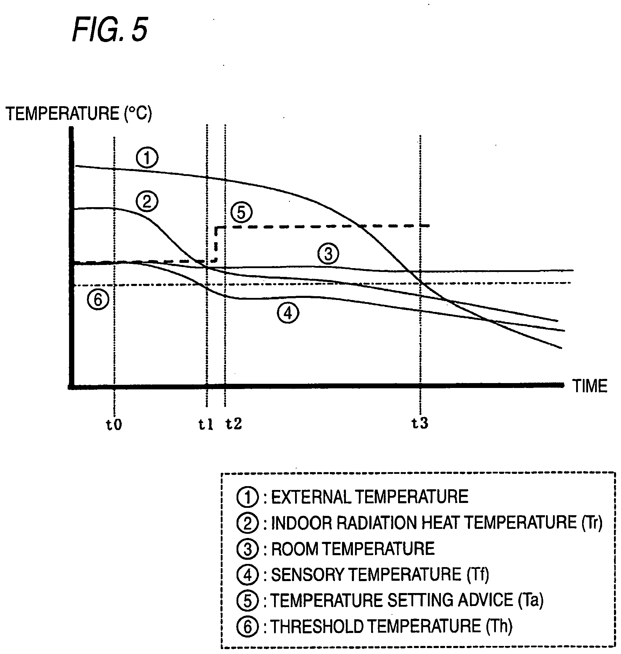

Fig. 5 is a view showing temperature changes in room temperature when the energy saving advice function is executed, by the relationship between the temperature setting advice and the threshold temperature. At a time t0, the user sets the same temperature as the temperature setting advice Ta to the user setting temperature, and the room temperature and the sensory temperature Tf are equal to each other. At a time t1, external temperature drops, the indoor radiant temperature Tr drops rapidly, and the sensory temperature Tf becomes lower than the threshold temperature Th. Then, a temperature higher than the current user setting temperature Tu is set as the temperature setting advice Ta. At a time t2, since the user has executed the energy saving advice, the drop speed of the sensory temperature Tf and the room temperature has been slowed.

As in the case described in Background, if the energy saving advice is performed only by the external temperature and the threshold temperature Th, the energy saving advice is presented near the time t3. Therefore, in the related art energy saving apparatus, when the energy saving advice is displayed, not only will the sensory temperature and the room temperature drop considerably, and the user feel unpleasant, but also the energy saving effect becomes small. However, in this embodiment, the energy saving advice can be executed with suitable timing.

In the above described exemplary embodiments, the user action to be recommended is presented as the notification contents of the energy saving advice. However, along with this, the notification of the predicted value of what percentage of power consumption can be saved by the energy saving action or how much of an electric power charge can be saved may be sent. Additionally, in the notification of the actual energy saving result evaluation, not only the energy saving point, but also the consumed electric power that can be saved or the electric power charge that can be saved may be displayed as an energy saving deposit, as a result of taking an action corresponding to the energy saving advice.

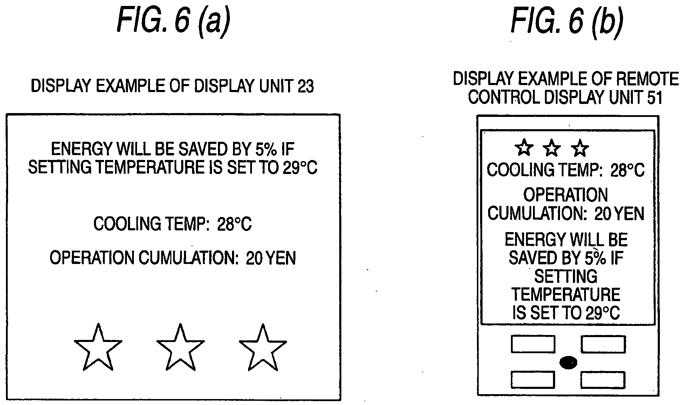

Fig. 6A shows a display example of a display unit 24 of the indoor device, and Fig. 6B shows a display example of a remote control display unit 51. The display example shows a current cooling setting temperature (28°C), a cumulative amount (20 yen) of the amount of an electric power charge used by the operation of the air conditioner, and the energy saving point (three points) with the number of star marks. Additionally, a display example (if the setting temperature is set to 29°C, energy is saved by 5%) of the energy saving advice is also shown together.

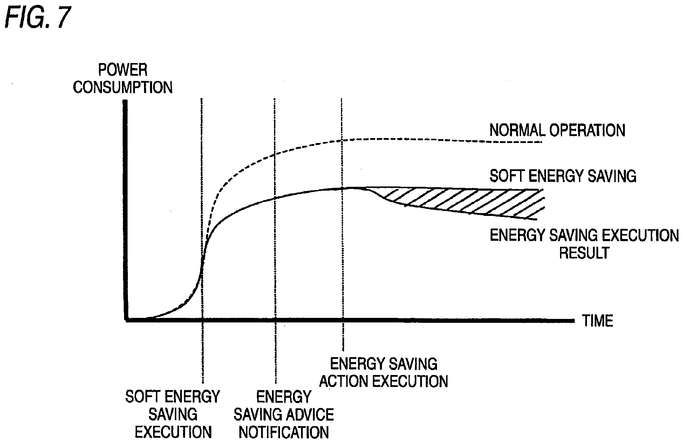

Graphical display may be used for the notification contents of the actual energy saving result evaluation. Fig. 7 is a display example of the graphical display displayed on the remote control display unit 51. Fig. 7 shows the transition of the power consumption when normal operation is performed, the transition of the power consumption when soft energy saving is executed and the transition of the power consumption when an energy saving action is executed. A shadow area in Fig.7 shows the consumed electric power which can be reduced by the energy saving action. The amount of an electric power charge corresponding to the consumed electric power which is to be saved is defined as an energy saving deposit. Since such graph display is easy to understand, there are advantages in that a user can actually feel an energy saving effect, and the user's motivation can be improved as the user's actions are evaluated in terms of electric power, the amount of money, etc. In addition, the soft energy saving is the energy saving realized by the operation control of the air conditioner, such as area air conditioning when the wind direction from the indoor device is changed and only the vicinity of a person is air-conditioned.

In the above-described Embodiment 1, the energy saving advice is created on the basis on the sensor information, and the advice contents are displayed on the display unit of the remote control or the main body of the indoor device. Thus, a user can easily confirm the energy saving advice contents. Additionally, by verifying the energy saving actions of the user on the basis of the sensor information, actual results of the energy saving actions of the user can be evaluated. The evaluation result thereof is displayed on the display unit of the remote control or the main body of the indoor device so as to notify the user. Thus, the user can understand the effect of his/her energy saving action objectively.

In Embodiment 1, the energy saving advice is presented on the basis of the sensory temperature of a person in a stable indoor environment. Thus, suitable advice can be presented at an early stage, and a scene about which a user feels unpleasant can be reduced. Additionally, since advice based on the sensory temperature is presented, it is possible to realize optimal energy saving while providing amenity that was not realized simply by advising the setting temperature so that a difference from government recommendation temperature (cooling: 20°C, and warming: 28°C) is made small.

In addition, it is possible not only to calculate the sensory temperature from the indoor radiant heat, but also to calculate the sensory temperature, taking account of air capacity, wind direction, blowoff temperature and humidity of the air conditioner itself. As specific calculating methods of the sensory temperature, techniques similar to an indicator such as a thermal environment rating index PMV (Predicted Mean Vote, Predicted Warm/Cool Feeling Report) can be applied.

Additionally, in a case where the existence/non-existence of an advice is signaled by the LED of the display unit 24 or the remote control display unit 51 when the actual energy saving result evaluation is displayed, the LED is turned off when the energy saving action by the advice is confirmed. In this way, since the energy saving advice contents and the LED are automatically turned off as the user performs the energy saving action according to advice, the user operation does not become troublesome.

Additionally, the LED may be initially flickered, and then changed to be steadily on. If the user dares to ignore energy saving advice, continuing in the flickering mode is unpleasant. However, when the LED is switched to being steadily on, the user does not feel unpleasant and is able to notice the advice notification afterward and execute the advice.

Additionally, after advice contents are displayed by the remote control display unit 51, the advice contents may be first turned off, and a predetermined prohibition time may be provided until the same advice is displayed again. If a user does not execute the advice while confirming the advice by the remote control 5, since there is no case where the advice is displayed again with the next sensing timing, troublesomeness to the user can be alleviated.

Additionally, an advice confirmation button (not shown) may be provided in the remote control operation unit 52. When the user has depressed the advice confirmation button, the advice contents may be first turned off, and a predetermined prohibition time may be provided until the same advice is again displayed.

There are also cases where the user gives priority to amenity over energy saving effect, for example when the user invites a visitor into the user's home and does not want to present the energy saving advice in front of the visitor. In this case, a function may be selected specifying whether or not energy saving advice is to be used. Specifically, it is desirable to provide a structure in which an advice reception button is provided on the remote control operation unit 52, and by simply pushing the advice reception button for a long time, the function switches between accepting and not accepting the energy saving advice. Additionally, a time period where the user does not want to present advice with the remote control may be designated so that energy saving advice functions are stopped.

Although advising a change in setting temperature has been described, the advice contents are not limited thereto. For example, the opening or closing of a curtain, a door or a window may be advised. The confirmation of the opening or closing state of curtains, etc. is possible by detecting an amount of solar radiation from a heat pixel image of the infrared sensor 21 or a illuminance of a camera image of the camera 23. If the outdoor temperature is lower than the indoor temperature, opening a curtain or a window may be advised.

Additionally, it is also possible to identify a shape of a room from the heat pixel image of the infrared sensor 21 or the camera image of the camera 23. When a user purchases an air conditioner, a model with the capability adapted to the size of a room to be installed is often purchased. Thus, the size of the room installed can also be estimated from the model name of the air conditioner.

Additionally, if an air conditioning load for maintaining the user setting temperature is a value more than the threshold of the air conditioning load estimated from the shape or the size of the room, it is also possible to determine that a window or a door is opened and to advise closing of a window or a door.

Even in other energy saving apparatuses, the same control is possible. When a television is taken as an example, a human body detecting sensor or a camera is provided to the television, so that management of television viewing time of a child can be performed from sensor information by the human body detecting sensor or a camera image obtained by the camera. That is, energy saving evaluations can be executed on the basis of indicators of whether the child has refrained from watching a desired program, whether a predetermined television viewing time has been kept, or to what extent the user has refrained from watching a long time program, such as a movie.

Additionally, the sleep state of a person can be understood using a sensor that can measure any one of body motion, breathing, cardiac beats and body temperature or using an illuminance sensor. Additionally, it is possible to determine that the person is reading a book on their desk and studying, by utilizing an infrared sensor, a pressure-sensitive sensor in a chair or a desk ID reader which determines ID information, such as the kind, title, etc. of the book from a bar code printed on the book, etc. Also, if the person makes an action, such as reading a book, without continuing to turn on the television, it can be evaluated that an energy saving action has been made.

In a lighting device, if the person turns on a light and is performing some activity by the window while light is on, turning the light OFF is advised. If the person is working near a window or in a place where illuminance is strong, the person can dispense with turning on the light. Therefore, the propriety of advice is determined by acquiring the illuminance of the OFF state from an illuminance sensor to use the illuminance as a threshold illuminance. If the light is turned off on the basis of the advice, evaluation is performed.

### Embodiment 2

In Embodiment 2, an energy saving advice function to urge the opening/closing of a window, a door, a curtain, etc. which is presented on the basis of sensor information acquired by a pressure sensor, etc. will be described. An air conditioner as the energy saving apparatus will be described as an example. The system configuration is the same as that of Embodiment 1 (Figs. 1 and 2). In addition, description of the operation which is the same as or similar to that of Embodiment 1 is omitted, and different portions will be described.

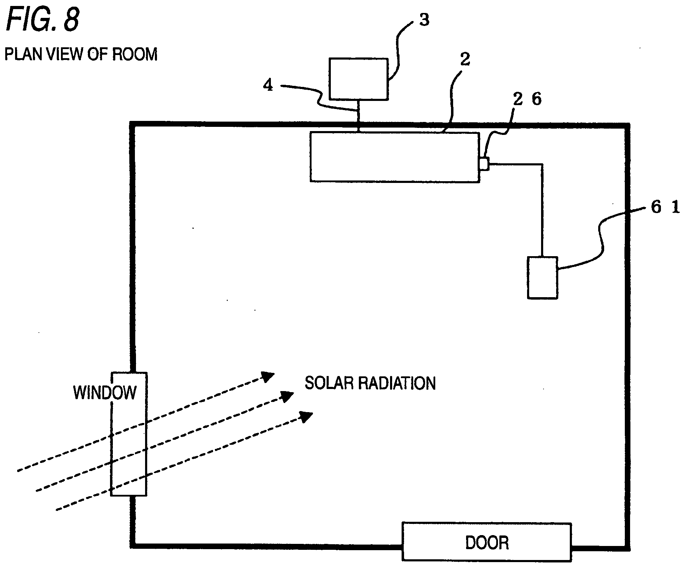

Fig. 8 shows a form in which a pressure sensor 61 is connected to the indoor device 2 via the external sensor I/F unit 26 along with a plan view of a room where the indoor device 2 is installed. By measuring indoor pressure, a change in the negative pressure of the room can be known and, thereby, the opening/closing state of a door or a window can be detected.

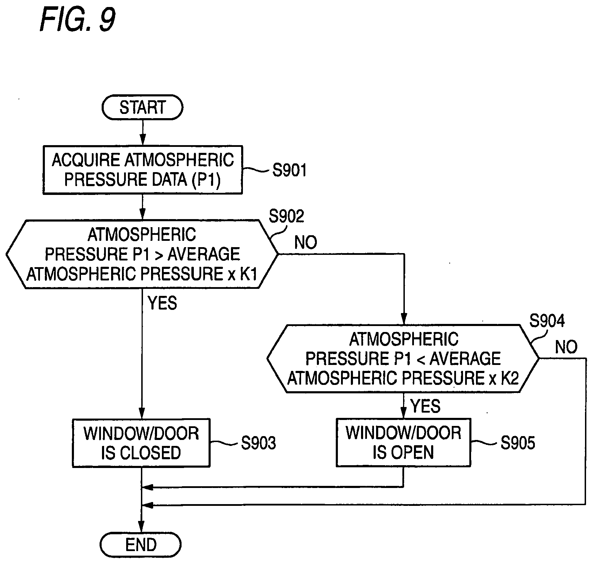

The operation of an opening/closing state detecting function of a door or a window based on the information of the pressure sensor will be described with reference to Fig. 9.

The control unit 27 acquires measurement data of an indoor atmospheric pressure P1 from the pressure sensor 61 via the external sensor I/F unit 26 (S901). It is determined whether or not the atmospheric pressure P1 is greater than K1 times of an average atmospheric pressure (S902). Here, K1 is a coefficient that is K1 > 1 and is generally set to the value of about K1 = 1.2 to 2. The average atmospheric pressure may be an average atmospheric pressure based on weather data in an area where the air conditioner is installed, or pressure fluctuations may be always recorded by the pressure sensor 61, and the average value of the pressure fluctuations may be used as the average atmospheric pressure. Next, when P1> Average atmospheric pressure × K1, it is determined that a window or a door is in a closed state (S903). Meanwhile, when P1 ≤ Average atmospheric pressure × K1, it is determined whether or not the atmospheric pressure P1 is smaller than K2 times of the average atmospheric pressure (S904). Here, K2 is a coefficient that is K2 < 1 and is generally set to the value of about K2 = 0.8. Next, when P1 < Average atmospheric pressure x K2, it is determined that a window or a door is in an open state (S905).

In the above description, the pressure sensor is provided only indoors. However, pressure sensors may be provided indoors and outdoors, and if indoor atmospheric pressure and outdoor atmospheric pressure are equal to each other, it may be determined that a window is in an open state, and if difference between the indoor and outdoor atmospheric pressures is equal to or greater than a certain value, it may be determined that the window is in a closed state. Additionally, in the case of a type where a pressure sensor is provided only indoors, and a ventilating fan discharges air to the outdoors, or in a case where there is no ventilating device, if the atmospheric pressure fluctuates 1.2 to 2 times greater than the normal pressure toward the rising side and immediately falls constantly, it can be determined that a window has been opened, whereas if the atmospheric pressure fluctuates greatly toward the falling side, and gradually continues to drop, it can be determined that the window has been closed. Since there is a case where the atmospheric pressure does not fluctuate toward the falling side depending on the shape of a door, if the average atmospheric pressure continues to drop, it may be determined that the door has been closed.

Opening/closing detection of a window or a door can also be performed by device other than the pressure sensor. For example, the air conditioner 1 can acquire opening/closing information on a door or a window by providing a door opening/closing sensor that performs opening/closing detection of the door or the window by the ON/OFF state of a contact point, and inputting the information from the door opening/closing detecting sensor via the external sensor I/F unit 26.

Additionally, even if the temperature of the outdoor temperature sensor 32 and the temperature of the room temperature sensor 22 are the same, opening of a window can be detected. Opening/closing detection of a window, a door, or curtain may be performed by loading a distance sensor on the indoor device 2 to measure a distance change. Additionally, opening/closing of a curtain can be detected by providing the indoor device 2 with a solar radiation sensor to measure an amount of indoor solar radiation. Additionally, the solar radiation sensor may be provided by external attachment so as to acquire solar radiation amount data via the external sensor I/F unit 26.

Opening/closing of a window, opening/closing of a curtain and opening/closing of a door are advised in order to lower air conditioning load by using the aforementioned various kinds of sensor information independently or in combination. In a case where a living room and a Japanese-style room are connected, the air conditioning space can be reduced and the operation load of the air conditioner can be reduced by closing a door or a sliding door.

Additionally, from external temperature and air conditioning load, advice of performing watering to lower the temperature around the outdoor device can be given. The water amount, direction, method, etc. of the watering can be advised from the amount of solar radiation by the aforementioned solar radiation sensor or the indoor heat radiation by an infrared sensor.

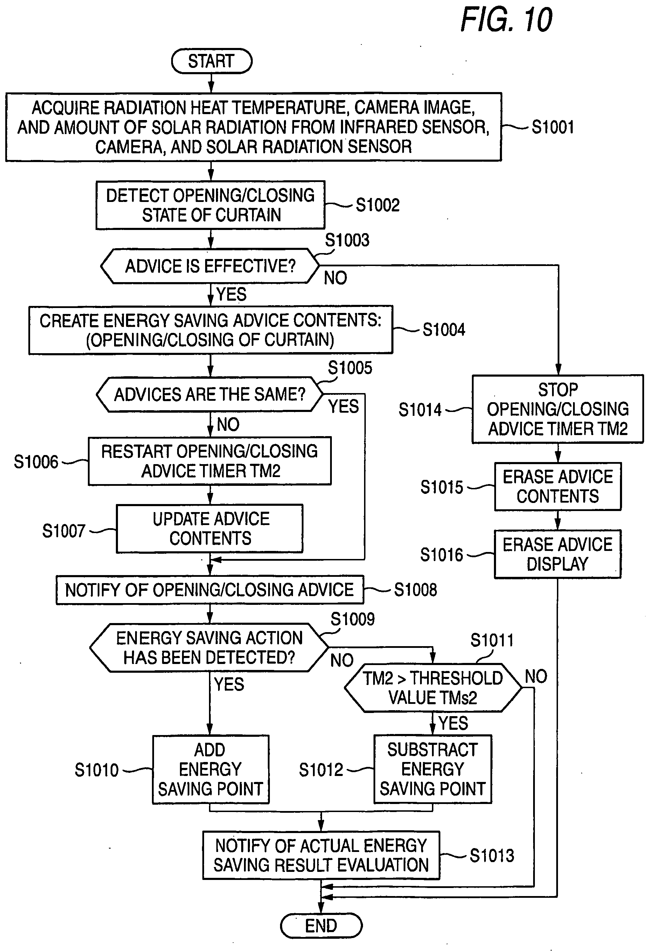

As one example, the operation of energy saving advice functions in a case where the opening/closing state of a curtain is detected using an infrared sensor, a camera, a solar radiation sensor, etc. and the opening/closing of the curtain is advised will be described in the operation flow of Fig. 10. In addition, the fundamental flow of the operation flow is the same as the operation flow of Fig. 4 described in Embodiment 1.

First, the control unit 27 acquires the indoor radiation heat temperature detected by the infrared sensor 21, the camera image from the camera 23 and the data of the amount of solar radiation by the solar radiation sensor (not shown) (S1001). The solar radiation sensor may be provided in the indoor device 2, and an sensor information from an external solar radiation sensor may be acquired via the external sensor I/F unit 26.

Next, the control unit 27 detects the opening/closing state of a curtain on the basis of the indoor radiant heat temperature, the camera image, and the amount of solar radiation (S1002). For example, a state where the amount of solar radiated by the solar radiation sensor has exceeded a threshold value is determined as the opening of the curtain. Next, the control unit 27 determines whether or not advising the opening/closing of the curtain is effective (S1003). Specifically, if the operation load of the air conditioner 1 can be reduced by opening the curtain or closing the curtain, which is determined from an operational status of the air conditioner 1 and the current opening/closing state of the curtain, advising the opening/closing of the curtain is determined to be effective. Thus, an energy saving advice contents that advise the opening/closing of the curtain is created (S1004). Here, the energy saving advice contents are referred to as a opening/closing advice contents.

Next, the control unit 27 compares currently notified opening/closing advice contents stored in the storage unit 28 with opening/closing advice contents created in the processing of S1004 (S1005). If both the advice contents do not coincide with each other, the value of an opening/closing advice timer TM2 included in the timer unit 29 is initialized by resetting to zero, and the timer is restarted (S1006), and the opening/closing advice contents which are stored in the storage unit 28 are updated by the advice contents created in the processing of S1004 (S1007). In contrast, if the currently notified opening/closing advice contents stored in the storage unit 28 coincide with the opening/closing advice contents created in the processing of S1004, the processing proceeds to the notification (S1008) of the opening/closing advice.

Next, the control unit 27 notifies the user of the created opening/closing advice (S1008). Next, the control unit performs verification of an energy saving action of the user, and determines whether or not the user makes an energy saving action on the basis of the opening/closing advice (S1009). Specifically, it is determined whether or not the opening/closing state of a curtain has changed according to the sensor information after the notification of the opening/closing advice. Since the following processing, which are the calculation of the energy saving point (S1011 to S1012) and the notification of the actual energy saving result evaluation (S1013), are basically the same as the operation flow described in Embodiment 1 and are different therefrom only in that the opening/closing advice timer TM2 and a threshold value TMs2 are used instead of the setting change advice timer TM1 and the threshold value TMs1, the description thereof is omitted.

On the other hand, if the answer is NO in the determination processing of S 1003, the opening/closing advice of the curtain is unnecessary. Thus, the processing proceeds to processing (S1014 to S1016) of cancelling the current opening/closing advice during display similarly to the operation flow described in Embodiment 1.

As described above, in Embodiment 2, energy saving advice which urges the opening/closing of a window, a door, a curtain, etc. is performed on the basis of sensor information acquired by a pressure sensor, etc. Thus, a user can easily know the opening/closing detection timing of a curtain, etc. and can save energy.

### Embodiment 3

In Embodiment 3, a function to perform energy saving advice after a person who is indoors is located based on sensor information will be described. Detection of the person by the sensor information is called human body detection. Human body detection is possible by creating a heat pixel image using the information from the infrared sensor.

Additionally, the movement of the person can also be detected by creating such dynamic pixel images at regular time intervals, and comparing the heat pixel images at each time. In addition, in a case where the sensor performs scanning to create the heat pixel image, the same person may be detected in a plurality of regions on one screen depending on the movement of the person. Even in this case, an erroneous recognition avoiding method, such as calculating the movement distance of the person, is also possible by understanding a past human body detecting position by using the heat pixel image at a past time. In addition, human body detection is also possible by conducting an image analysis of a camera image obtained by a camera in addition to the infrared sensor. In addition, a pyroelectric sensor, a Doppler sensor, etc. may be used.

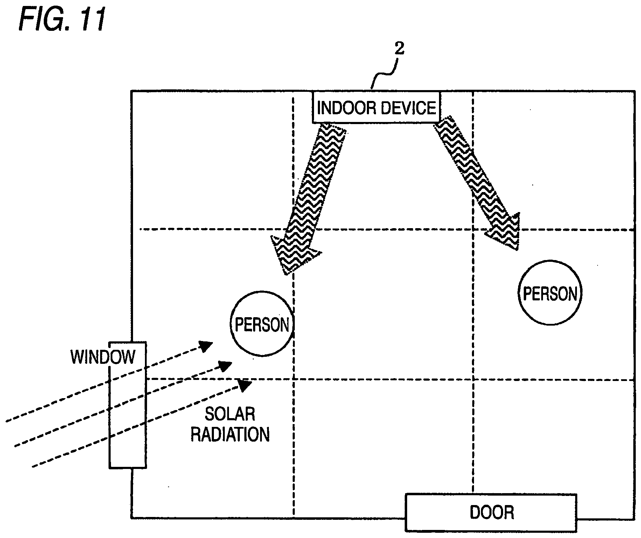

An air conditioner as the energy saving apparatus will be described as an example. The system configuration is the same as that of Embodiment 1 (Figs. 1 and 2). Fig. 11 is a plan view of a room where the air conditioner performs a cooling operation. There is a wind and a door in the room and the solar radiation of sunlight is entered into the room from the window. Additionally, a situation where two people exist in separate locations in the room is shown. In a case where the people separately exist in a plurality of places in the room, an arrangement in which the people are gathered into one place allows energy to be easily saved spatially. Thus, it is effective that gathering the people into one place is advised. Additionally, since a person (A) gets near to a window and receives the solar radiation, a cooling load can be lowered by moving the person to a position away from the window. Hence, it is effective to give advice so that the person gets away from the window.

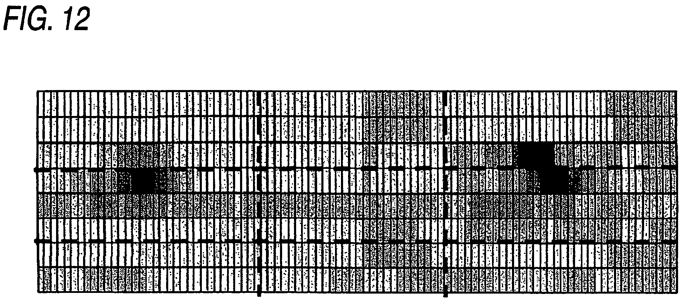

Fig. 12 is an example of measurement of the heat pixel image by the infrared sensor 21 provided in the indoor device 2, in the situation of the room of Fig. 11. In Fig. 12, the fluctuation of radiation heat temperature is shown by the shading of color of each pixel. Additionally, in a case where a measurement region is divided into nine regions delimited by dotted lines, the radiation heat temperature is high in upper right region and center left region, and it can be estimated that people exist in these two regions. In this way, if the human body detection is performed in a plurality of ranges, the calculation result that people exist as many as these ranges is obtained.

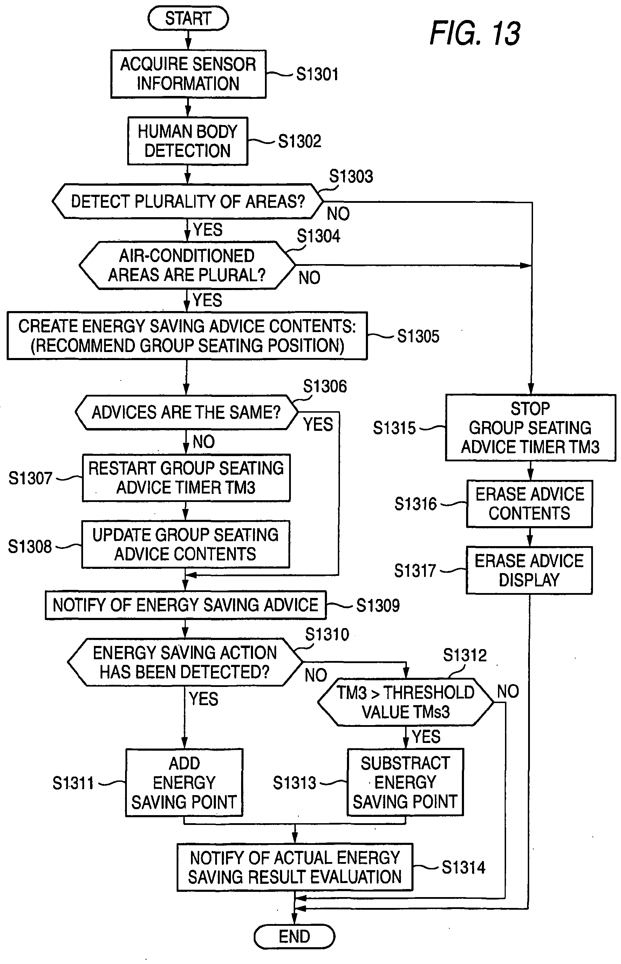

A function to perform a group seating advice by the human body detection will be described with reference to Fig. 13. First, the control unit 27 acquires sensor information of the infrared sensor 21, etc. (S1301). The human body detection is performed by the aforementioned analysis of a heat pixel image, etc. from the acquired sensor information (S1302). As a result of the human body detection, it is checked whether or not human bodies are detected in a plurality of areas (S1303). If human bodies are detected in a plurality of areas, whether or not the area which is currently air-conditioned targets a plurality of areas is investigated with reference to the operation setting information on the air conditioner 1 (S1304). If a plurality of air-conditioning areas is targeted, an arrangement in which the people are gathered into one place allows energy to be easily saved spatially. Thus, an energy saving advice contents that arranges people appropriately is created (S1305). Here, the energy saving advice contents are referred to as a group seating advice contents.

Next, the control unit 27 compares currently notified group seating advice contents stored in the storage unit 28 with the group seating advice contents created in the processing of S1305 (S1306). If both the advice contents do not coincide with each other, the value of a group seating advice timer TM3 included in the timer unit 29 is initialized by resetting to zero, and the timer is restarted (S1307), and the group seating advice contents which are stored in the storage unit 28 are updated by the group seating advice contents created in the processing of S1305 (S1308). In contrast, if the currently notified group seating advice contents stored in the storage unit 28 and the group seating advice contents created in the processing of S1305 coincide with each other, the processing proceeds to notification (S1309) of the group seating advice.

Next, the control unit 27 notifies the created group seating advice to a user (S1309). Since processing after this is basically the same as the operation flow described in Embodiment 1, and is different therefrom only in that the group seating advice timer TM3 and a threshold value TMs3 are used, description thereof is omitted.

On the other hand, if the answer is NO in the determination processing of S1303 and S1304, the group seating advice is unnecessary. Thus, the processing proceeds to processing (S1315 to S1317) of cancelling the current group seating advice during display similarly to the operation flow described in Embodiment 1.

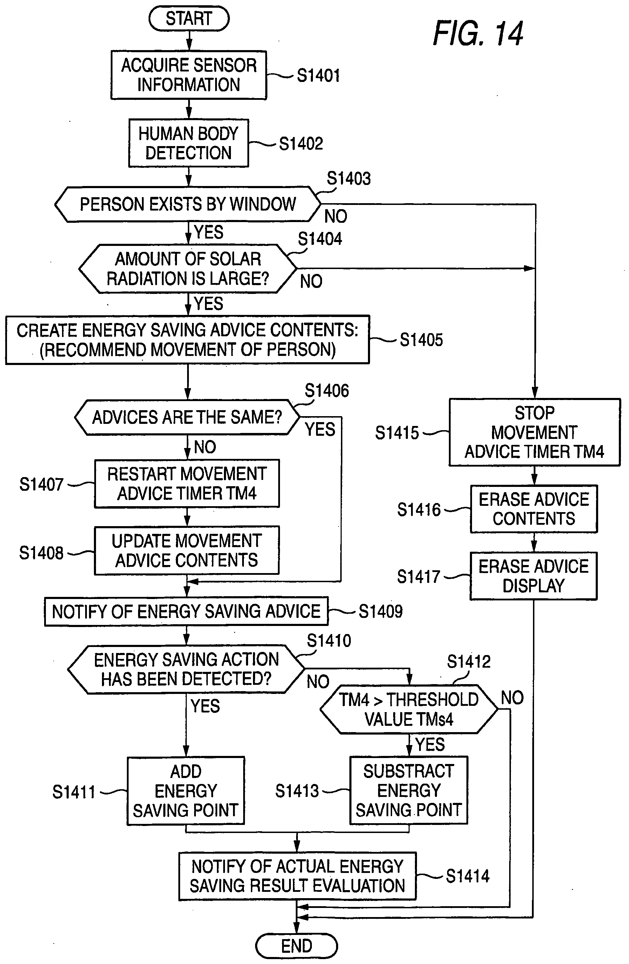

Next, a function to give an advice of person movement by the human body detection will be described with reference to Fig. 14. First, the control unit 27 acquires sensor information of the infrared sensor 21, etc. (S1401). The human body detection is performed by the aforementioned analysis of a heat pixel image, etc. from the acquired sensor information (S1402). As a result of the human body detection, it is checked whether or not a person exists in an area beside a window (S1403). If a person exists in an area beside a window, it is determined from the information of the solar radiation sensor whether or not there is a large amount of solar radiation (S1404). In the determination of the amount of solar radiation, it is desirable that a threshold value for the determination of the amount of solar radiation is stored in the storage unit 28, and whether or not the amount of solar radiation is large or small is determined based on the threshold value. As a result of the determination, if the amount of solar radiation is large, the cooling load lowers and energy is easily saved by moving the person to a position apart from the window. Thus, an energy saving advice is created so that the person moves to a position apart from the window (S1405). Here, the energy saving advice is referred to as a movement advice.

Next, the control unit 27 compares currently notified movement advice contents stored in the storage unit 28 with the movement advice contents created in the processing of S1405 (S1406). If both the advice contents do not coincide with each other, the value of a movement advice timer TM4 included in the timer unit 29 is initialized by resetting to zero, and the timer is restarted (S1407), and the movement advice contents during display which are stored in the storage unit 28 are updated by the movement advice contents created in the processing of S1405 (S1408). In contrast, if the movement advice contents during display which are stored in the storage unit 28 and the advice contents created in the processing of S1405 coincide with each other, the processing proceeds to the notification (S1409) of the movement advice.

Next, the control unit 27 notifies the created movement advice to a user (S1409). Since processing after this is basically the same as the operation flow described in Embodiment 1, and is different therefrom only in that the movement advice timer TM4 and a threshold value TMs4 are used, description thereof is omitted.

On the other hand, if the answer is NO in the determination processing of S1403 and S1404, the movement advice is unnecessary. Thus, the processing proceeds to processing (S1415 to S1417) of cancelling the current movement advice during display similarly to the operation flow described in Embodiment 1.

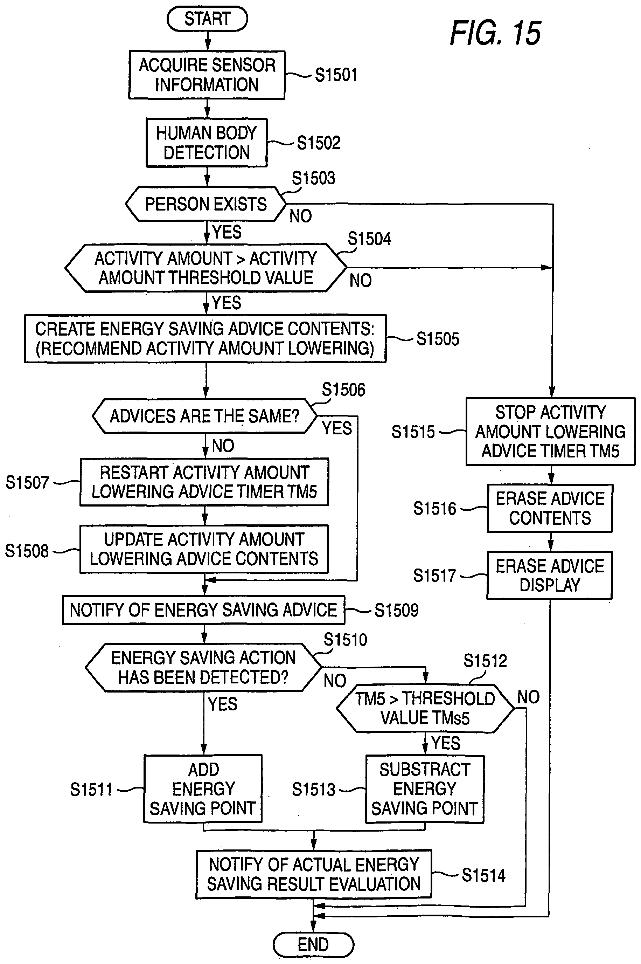

Next, a function to present advice of lowering the amount of activity of a person by the human body detection will be described with reference to Fig. 15. First, the control unit 27 acquires sensor information of the infrared sensor 21, etc. (S1501). The human body detection is performed from the acquired sensor information (S1502). As a result of the human body detection, whether or not a person exists indoors is determined (S1503). If the existence of a person is confirmed, it is determined that the amount of activity of the person is greater than the threshold value of the amount of activity (S1504). The amount of activity of a person can be calculated by measuring the movement distance of the same person by using heat pixel images at a plurality of times. For example, the cumulative value of the movement distance per unit time may be used as the amount of activity. The activity threshold value is a value stored in the storage unit 28 as a parameter.

If the detected amount of activity is greater than the threshold value of the amount of activity, this shows that the amount of activity of the person is large. Since the air conditioning load lowers as the amount of activity is lowered, an advice is created so that the amount of activity of the person is lowered by limiting the region where the person moves. For example, if the amount of activity detected is a magnitude over two blocks where air stream can be controlled by flap and vanes of the air conditioner, energy saving advice contents are created so as to urge the person to act within one block (S1505). The energy saving advice contents are referred to as activity amount lowering advice contents.

Next, the control unit 27 compares currently notified activity amount lowering advice contents stored in the storage unit 28 with the activity amount lowering advice contents created in the processing of S1505 (S1506). If both the advice contents do not coincide with each other, the value of a activity amount lowering advice timer TM5 included in the timer unit 29 is initialized by resetting to zero, and the timer is restarted (S1507), and the activity amount lowering advice contents during display which are stored in the storage unit 28 are updated by the activity amount lowering advice contents created in the processing of S1505 (S1508). In contrast, if the activity amount lowering advice contents during display which are stored in the storage unit 28 and the advice contents created in the processing of S1505 coincide with each other, the processing proceeds to notification (S1509) of the activity amount lowering advice.

Next, the control unit 27 notifies the created activity amount lowering advice to a user (S1509). Since processing after this is basically the same as the operation flow described in Embodiment 1, and is different therefrom only in that the activity amount lowering advice timer TM5 and a threshold value TMs5 are used, description thereof is omitted.

On the other hand, if the answer is NO in the determination processing of S1503 and S1504, the activity amount lowering advice is unnecessary. Thus, the processing proceeds to processing (S1515 to S1517) of cancelling the current activity amount lowering advice during display similarly to the operation flow described in Embodiment 1.

As described above, in Embodiment 3, energy saving advice which urges the opening/closing of a window, a door, a curtain, etc., is performed on the basis of sensor information acquired by a pressure sensor, etc. Thus, a user can easily know opening/closing detection timing of the curtain, etc. and can save energy.

### Embodiment 4

In Embodiment 4, a function to detect abnormal operation or performance degradation caused by soiling of an outdoor fan of an outdoor device of the energy saving apparatus and to present a user with advice which realizes energy saving will be described. An air conditioner 1 is an example of the energy saving apparatus. If these abnormal operations and performance degradations are neglected, operating efficiency of the whole air conditioner will decrease, and energy loss will become large. Accordingly, as these abnormal operation and performance degradation are detected and notified to a user at an early stage , the user takes a measure for maintenance, and thus energy saving can consequently be realized.

At present, many of outdoor fans on which a motor is installed for driving the outdoor fan perform inverter control. In inverter control, the rotational frequency and torque of the motor are measured, and the motor is controlled based on these measurement values. Assuming that the environmental conditions such as outside wind are the same, the abnormal operation and performance degradation of the outdoor fan can be detected from motor driving conditions and the measurement values obtained by the above measurement. For example, if torque above a threshold value with respect to the same rotational frequency is required, pressure loss increases, and adhesion of dust to the fan, performance degradation of bearings, adhesion of dust or frost to a filter or a heat exchanger, etc. can be detected. Even if a change in the rotational frequency with respect to the same torque is detected, the same determination is possible. On the basis of these detection results, advice can be given so that adhesion of dust to a filter, a fan, and a heat exchanger is cleaned. Such an energy saving advice function can also be utilized for the detection of timing of cleaning in a case where an automatic cleaning function is included.

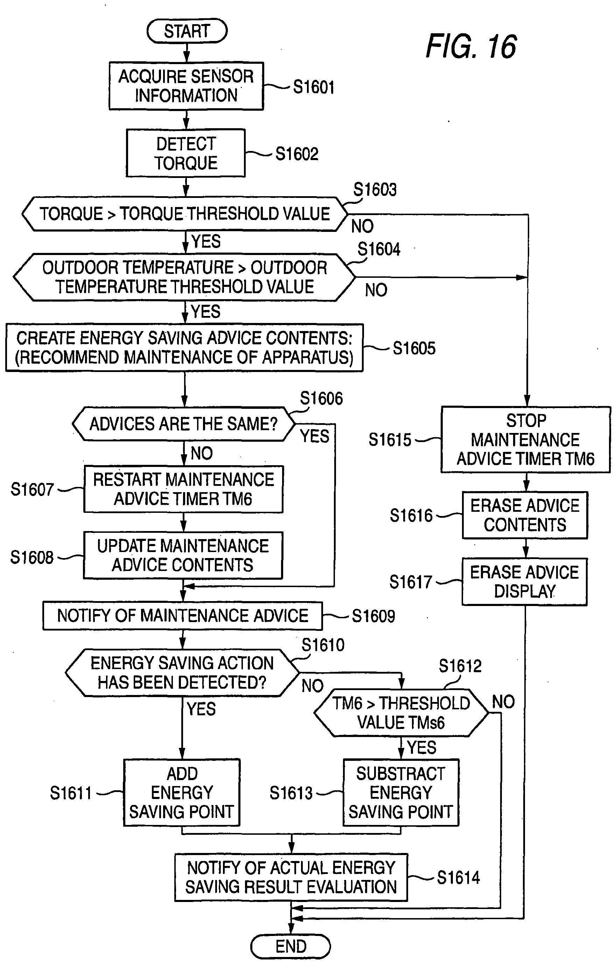

The operation of this embodiment will be described with reference to Fig. 16. In addition, the system configuration is the same as that of Embodiment 1 (Figs. 1 and 2). First, the control unit 27 acquires sensor information from the temperature sensor 32, a rotational frequency detecting sensor of a fan, and a motor driving current detecting sensor (all of them are not shown), which are provided in the outdoor device 3 (S1601). Next, the torque of the motor is detected from such sensor information (S1602). The detected torque is compared with a torque threshold value (S1603). Since environmental conditions, such as the influence of outside wind, change depending on the installation conditions of the outdoor device 3, it is necessary to change the torque threshold value in the installation conditions. For this reason, the torque threshold value is determined with reference to a database stored in advance in the storage unit 28, by inputting the installation conditions of the outdoor device 3 by the remote control 5 as the initial value or initial setting of the torque threshold value when the outdoor device 3 is installed. The torque threshold value which corresponds to each installation condition of the outdoor device is specified in the database.

In addition, a reference destination of the database can also be automatically decided by determining the installation conditions from only the sensor information instead of the user input. For example, sensors which can determine the installation conditions, such as an orientation detecting sensor, a distance sensor which can measure a distance ahead of a person, and a sensor for human body detection or moving body detection, which detects moving objects and is capable of determining whether or not the moving object faces a road, can be used.

If the torque is greater than a torque threshold value, the outdoor temperature is compared with an outdoor temperature threshold value (S1604). The outdoor temperature threshold value is a frosting temperature of a heat exchanger of the outdoor device 3, and is a value determined with reference to the database stored in the storage unit 28 similarly to the torque threshold value. If the outdoor temperature is greater than the outdoor temperature threshold value, it is determined that the maintenance of the outdoor fan 31 is required, and energy saving advice contents which recommends the maintenance of an apparatus is created (S1605). The energy saving advice contents are referred to as maintenance advice contents.

Next, the control unit 27 compares currently notified maintenance advice contents stored in the storage unit 28 with the maintenance advice contents created in the processing of S1605 (S1606). If both the advice contents do not coincide with each other, the value of a maintenance advice timer TM6 included in the timer unit 29 is initialized by resetting to zero, and the timer is restarted (S1607), and the maintenance advice contents during display which are stored in the storage unit 28 are updated by the maintenance advice contents created in the processing of S1605 (S1608). In contrast, if the maintenance advice contents during display which are stored in the storage unit 28 and the advice contents created in the processing of S1605 coincide with each other, the processing proceeds to notification (S1609) of the maintenance advice.

Next, the control unit 27 notifies the created maintenance advice to a user (S1609). Since processing after this is basically the same as the operation flow described in Embodiment 1, and is different therefrom only in that the maintenance advice timer TM6 and a threshold value TMs6 are used, the description thereof is omitted.

On the other hand, if the answer is NO in the determination processing of S1603 and S1604, the maintenance advice is unnecessary. Thus, processing proceeds to the processing (S1615 to S1617) of cancelling a current maintenance advice during display similarly to the operation flow described in Embodiment 1.

As described above, in Embodiment 4, the energy saving advice is performed to the user by detecting the abnormal operation or the performance degradation caused by soiling.. Thus, the user can know the necessity for the maintenance of the outdoor fan easily even if they are indoors, and if the user performs maintenance on the basis of the energy saving advice, energy saving can consequently be performed.

The above apparatus described in this embodiment can be applied to any arbitrary apparatus with a motor as well as the air conditioner, and can also be applied to ventilating fans, humidifier, dehumidifiers, air cleaners, heat pump type hot water supply machines, etc. For example, if dust adheres to a ventilating fan, and efficiency decreases, energy saving advice to perform cleaning or attach a filter during starting can be provided, and an energy saving effect at home or in a factory can be expected.

### Embodiment 5

In Embodiment 5, a function to measure the wind speed of outside wind from the rotational frequency of the outdoor fan of the energy saving apparatus and to provide the energy saving advice of opening a window on the basis of the wind speed will be described. An air conditioner 1 is an example of the energy saving apparatus. If there is a wind force of outside wind, a person can be made comfortable by opening a window even if outdoor temperature is to some extent high; it is effective to give advice to turn off the air conditioner to open the window.

As described in Embodiment 4, the rotational frequency of a fan can be measured by a fan rotational frequency detecting sensor of the outdoor fan. As the type of the fan rotational frequency detecting sensor, there are an optical type, a magnetic type, an electric current detection type, etc., any arbitrary type is available, if the rotational frequency can be accurately measured. The rotational frequency of the fan is determined depending on the driving force of a motor or the wind speed of outside wind. Additionally, even when the fan motor is not being driven, if there is outside wind, the fan rotates depending on the wind force. Thus, the wind force of outside wind can be calculated by measuring the rotational frequency of the fan when the fan motor is stopped.

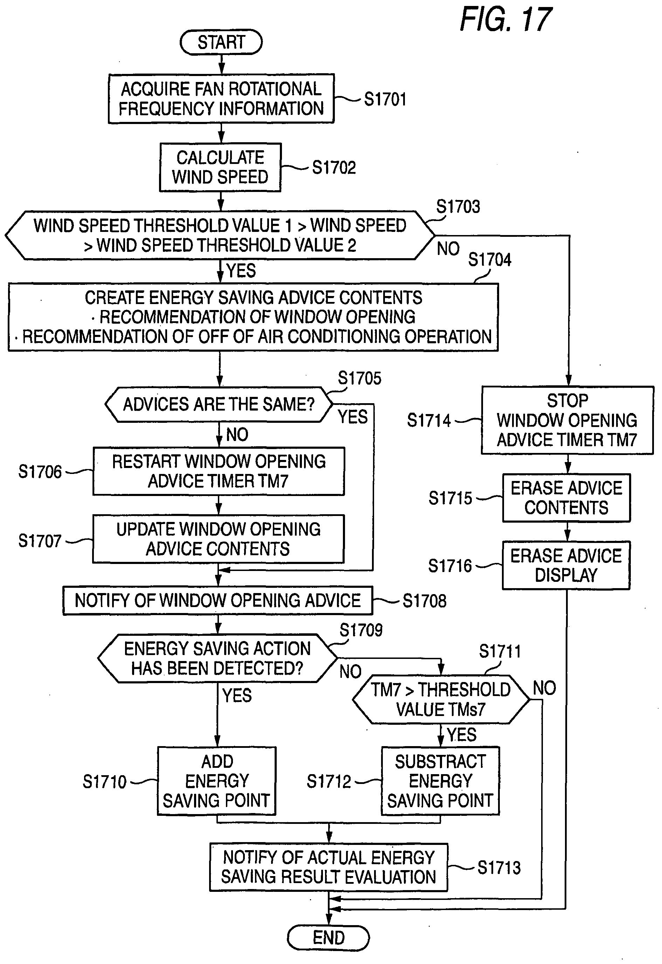

The operation of this embodiment will be described with reference to Fig. 17. In addition, the system configuration is the same as that of Embodiment 1 (Figs. 1 and 2). First, the control unit 27 acquires the information on fan rotational frequency from the rotational frequency detecting sensor (not shown) of the fan provided in the outdoor device 3, when the fan motor (not shown) of the outdoor device 3 has stopped (S1701). Next, the wind speed of the outside wind is calculated from the acquired rotational frequency information (S1702). The calculation may be performed according to a formula for calculation which is set in advance. Otherwise, a conversion table between the fan rotational frequency and the wind speed of outside wind may be stored in the storage unit 28, and the wind speed may be obtained from the rotational frequency on the basis of the conversion table.

Next, it is determined whether or not the calculated wind speed is within a predetermined range (S1703). Specifically, a first wind speed threshold value as an upper limit threshold value, a second wind speed threshold value as a lower limit threshold value are set in advance, and, it is determined whether or not the wind speed satisfies the inequality of first wind speed threshold value > wind speed > second wind speed threshold value. The determination is performed in order to confirm that the wind force of outside wind is a suitable wind force for an indoor environment. If the calculated wind speed is within a predetermined range, the energy saving advice contents which recommends ceasing air conditioning operation and window opening is created (S1704). The energy saving advice contents are referred to as window opening advice contents.

Next, the control unit 27 compares currently notified window opening advice contents stored in the storage unit 28 with the window opening advice contents created in the processing of S1704 (S1705). If both the advice contents do not coincide with each other, the value of a window opening advice timer TM7 included in the timer unit 29 is initialized by resetting to zero, and the timer is restarted (S1706), and the window opening advice contents during display which are stored in the storage unit 28 are updated by the window opening advice contents created in the processing of S 1704 (S1707). In contrast, if the window opening advice contents during display which are stored in the storage unit 28 and the advice contents created in the processing of S1706 coincide with each other, the processing proceeds to notification (S1708) of the window opening advice contents.

Next, the control unit 27 notifies the created window opening advice to a user (S1708). Since processing after this is basically the same as the operation flow described in Embodiment 1, and is different therefrom only in that a window opening advice timer TM7 and a threshold value TMs7 are used, the description thereof is omitted.

On the other hand, if the answer is NO in the determination processing of S1703, the window opening advice is unnecessary. Thus, the processing proceeds to processing (S1714 to S1716) of cancelling a window opening advice during display similarly to the operation flow described in Embodiment 1.

Since this embodiment is configured as described above, window opening advice can be presented in consideration of the situation of the outside wind. Even if the outdoor temperature is lower than a setting temperature, if there is no wind and the humidity is high, the person may not feel conformable even if a window is opened. Thus, it is meaningful to know the situation of the outside wind. Additionally, if cooling operation is taken as an example in a case where a window opening advice is performed using only the external temperature, the threshold value of the outside temperature at which a window is opened becomes low, and the air conditioner is operating until the outside temperature drops to a low temperature. Thus, the power consumption equivalent to this will be required. In this method, energy saving advice which saves equivalent power consumption is possible.

In the above description, the wind speed of outside wind is measured from the rotational frequency of the outdoor fan 31. However, an anemometer may be separately provided to measure a wind force. Additionally, the information on the outdoor temperature sensor may be utilized so as to determine the effectiveness of window opening. Additionally, if wind speed is strong, a radiation heat drop can be predicted. Therefore, in a case where there is no radiation heat sensor, such as an infrared sensor, in the air conditioner, advice which changes the setting temperature to a temperature which is slightly higher than ever before can also be presented based on wind measurement.

Generally, if there is a wind speed (for example, equal to or more than 6 m/s) of threshold value abnormality in the air conditioner before the starting of the outdoor fan, and the fan rotational frequency is constant, the control which does not start the air conditioner is performed. A simple energy saving advice about the opening/closing based on this starting/non-starting determination may be presented.

In the case of a type in which the outdoor fan is energized from the indoor device, energization is required in order to measure outside wind. However, the measurement can be made without energization by generating electricity with the induced voltage of a motor if the rotational frequency of the outdoor fan is equal to or more than a certain value. Additionally, the rotational frequency measured in the outdoor fan may be stored in a memory circuit provided in the outdoor device, and the memory circuit may communicate with the indoor device when the inside thereof is energized so that the indoor device acquires the stored rotational frequency information.

The characteristics relationship between the wind force of the outside wind and the fan rotational frequency changes in the installation state (installation along a wall, installation in a roof, etc.) of the outdoor unit. For example, since the outdoor fan is hardly rotated depending on wind directions, the distance sensor or illuminance sensor may be provided in the outdoor unit, and surrounding situations may be measured in advance by the distance sensor and the illuminance sensor, respectively. Then, correction values may be set from these measurement values, and wind speed calculation may be performed using these correction values. Alternatively, the correction values may be input and set when the apparatus is installed.

Additionally, the wind speed before the starting of the outdoor fan may be different from the wind speed during an air conditioning operation. In order to cope with this case, the torque variation during the starting of the fan motor may be measured to determine a wind speed change, or the outdoor fan may be periodically stopped to measure wind speed.

The wind speed measurement depending on the torque variation during the starting of the fan motor will be described. The time when the pulse width of a signal of a sensor which detects the position of the rotor of the fan motor has increased is detected as a load torque increase caused by an outside wind, etc. Alternatively, a load torque change may be detected using a motor current or a shunt current. The calculation of the wind speed of the outside wind may be performed by storing the relationship between the amount of the torque change and the wind speed of the outside wind as a table in advance, and calculating the wind speed using the table.

Additionally, since load torque increases if frost or dust attaches to a heat exchanger, it is necessary to separate the load torque increase caused by the outside wind from an increase in load torque caused by adhesion of frost or dust to the heat exchanger. The method of performing measurement in non-control described in Embodiment 4 can be utilized for this. Additionally, it is also effective to present advice so that the current setting is not changed without reason, including a case where air conditioning capacity declines since the outdoor device is put into a defrosting state.

### Embodiment 6

In Embodiment 6, a function to present energy saving advice which causes a user to set a target value of cumulative power consumption so that the target can be achieved will be described. An air conditioner 1 is an example of the energy saving apparatus. The system configuration is the same as that of Embodiment 1 (Figs. 1 and 2). In addition, a target value of monthly cumulative power consumption is suitably set in advance using the remote control 5 by a user, and the target value is stored in the storage unit 28 of the indoor device 2.

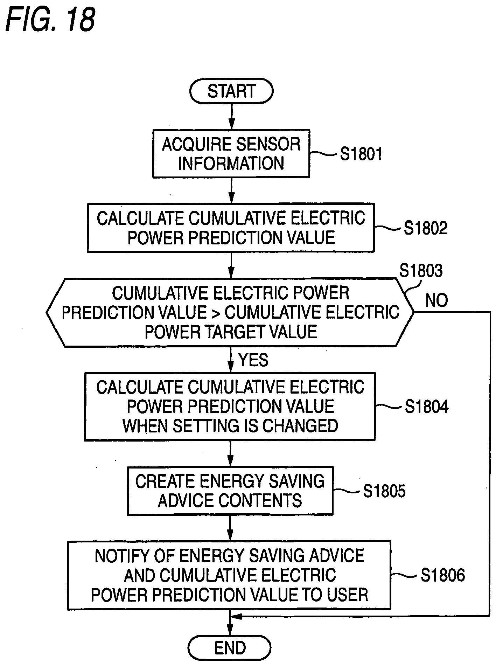

Fig. 18 is a view showing the operation of the control unit 27 which executes the energy saving advice functions of this embodiment. First, the control unit 27 acquires sensor information that are measurement values measured by the infrared sensor 21, etc. (S1801). Next, on the basis of the sensor information, and user setting values regarding the air conditioning operation stored in the storage unit 28, a cumulative electric power prediction value for one month is calculated from this time (S1802). Next, the cumulative electric power prediction value that is a calculated result, and a cumulative electric power target value set in advance by the user are compared with each other (S1803). As a result of the comparison, if cumulative electric power prediction value ≤ cumulative electric power target value is established, since the cumulative electric power prediction value does not exceed the cumulative electric power target value, energy saving advice based on the cumulative power consumption target value is not presented. On the other hand, if cumulative electric power prediction value > cumulative electric power target value is established, i.e., if it is predicted that the cumulative value of electric power used exceeds the target value within a period, the cumulative electric power prediction value, when energy saving advice is executed by changing user setting value, is calculated (S1804). The cumulative electric power prediction value is determined and calculated from general operation time data or air conditioning load in the database stored in the storage unit 28.

There are a setting temperature change, an operating mode change, etc. as the user setting values, and a cumulative electric power prediction value is calculated for every setting change pattern. The setting change patterns include, for example, switching an operating mode from a cooling operation to a cooling feeling operation (where a wind speed of a fan is raised and the fan is swung, a sensory temperature is lowered, and the setting temperature is raised), or turning off an unattended air conditioning operation. As for powering off of the unattended air conditioning operation, an energy saving effect is calculated by comparing the amount of electric power with respect to an air conditioning operation period when the user is absent with a case where the air conditioning operation is stopped when the user is absent. Energy saving advice contents corresponding to these user setting value changes are created (S1805).

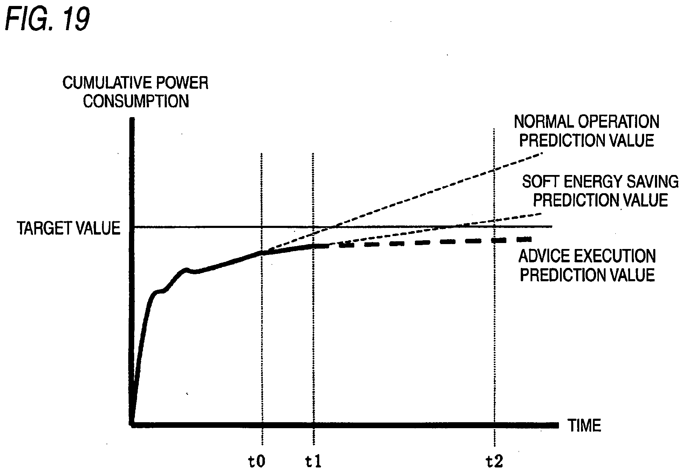

Next, the energy saving advice contents, and the cumulative power consumption prediction result at a setting change are notified to the user by displaying them on the display unit 24 or the remote control display unit 51 (S1806). In the notification, the cumulative power consumption prediction result for every setting change pattern is presented so as to be known. Although the format of the presentation may be texts, if the prediction results are displayed by graphs as in Fig. 19, these graphs can be easily understood by the user. In Fig. 19, time-series data of target values of cumulative power consumption up to now is shown by a solid line, and prediction values at normal operation, prediction values when soft energy saving is executed, and prediction values when energy saving advice is executed are shown by three dotted lines, respectively. The calculation of the soft energy saving is performed by storing what percents of energy is saved from the prediction values at normal operation in database. The example shows that a user performs switching from a normal operation mode to a soft energy saving mode at a time t0, and a current time is t1. A time t2 is a time after a predetermined time (for example, 3 hours later) from the time t1, and is provided for convenience of description. Generally, a line for normal operation prediction values shows prediction values when the normal operation mode lasts even after the time t0. Generally, a line for soft energy saving prediction values shows prediction values when the soft energy saving mode lasts even after the time t1. A line for energy saving advice execution prediction values shows prediction values when operation is performed according to energy saving advice after the time t1. From Fig. 19, the user can understand that the advice execution prediction value does not exceed the target value of cumulative power consumption at the time t2. In addition, when the advice execution prediction values are performed in a plurality of patterns, it is desirable to increase and display prediction lines in the drawing.

In this way, since the user can understand how many hours the air conditioner can be used after every setting, the user can use setting properly according to the status of use. A user can determine the effects of energy saving and the amount of saved electric power at each setting change according to a use scene and the user can easily determine whether it is desirable to select any setting change.

The determination of whether or not a user has taken an energy saving action for an energy saving apparatus, etc. may be performed similarly to the technique described in the earlier embodiments. In addition, the graphical display like Fig. 19 is effective even in the case of the notification of actual energy saving result evaluation. The user can understood how much power consumption was saved in a day (whether there is a certain degree of margin to a target value) as a result of performing the energy saving action, and can also take a measure capable of setting and operating the air conditioner with slight composure on and after the next day.

Although the prediction value of cumulative power consumption is calculated in the above description, a cumulative electric power charge, or a prediction value of the amount of emission of CO₂ (carbon dioxide) may be calculated so that energy saving advice based on this is given. Additionally, a cumulative power consumption reduction target value may be adopted instead of the cumulative power consumption target value. Additionally, instead of a target value which is set in advance by the user, the target value may be target values published in external agencies, such as government, or the average value of actual results at home or a value obtained by subtracting a certain value from the average value. Additionally, it is desirable that the target period of the target value is set in accordance with the form of utilization by the user, irrespective of one month or one week.

Additionally, the simulation display in which graphs change by redrawing a graph whenever the setting temperature changes 1°C, the change width of the setting temperature being 1°C, is also possible. Recommended modes, such as a sensitive to the heat-sensitive power mode (airing, swing, strong wind), may be prepared in advance so as to prevent setting articles from increasing and being complicated, and the user may be made to select any mode from these modes so that a prediction value is calculated for the selected mode.

As described above, since the energy saving advice corresponding to the user setting value change is created and a quantitative energy saving prediction value using a graph, etc. is presented to the user, the user can easily determine the necessity of an energy saving action.

Although an air conditioner as the energy saving apparatus has been described in an example in the above description, the technique described in this embodiment can also be similarly utilized in refrigerators or televisions. In the refrigerators, stopping automatic ice making, moving food in a switching compartment which has been used as a freezer and promptly switching to and using for cold storage, etc., are examples of energy setting advice depending on a setting change. Additionally, a user can be expected to accustom themselves to effective habits of carrying in food by presenting advice that the refrigerator can be driven one day if heat accumulation and electricity accumulation is performed with midnight electric power, and opening and closing is reduced during the daytime, and by displaying an evaluation result of an user's action for the advice.

If the refrigerator is overstuffed, or the refrigerator is exposed to solar radiation, the cooling load becomes high and power consumption increases. Accordingly, it is possible to give advice on how improve the loading state, or closing a curtain if the refrigerator is exposed to solar radiation, on the basis of the information from sensors attached to the inside or outside of the refrigerator, and it is possible to show the prediction value of cumulative electric power resulting from the advice.

Since televisions also have a back light and a cooling device and the operation load becomes large due to solar radiation, energy saving advice utilizing a solar radiation sensor or a thermistor is effective. Additionally, advices on energy saving, such as sensing the distance from a person, changing the illuminance of the back light, suppressing the amount of sound, optimizing the direction or angle of a display, are also available. Additionally, according to televisions, a method of lowering the illuminance or the volume on a routine basis, and canceling an energy saving mode when a person sees a movie is also effective for energy saving. The user can understand how energy can be saved by calculating a prediction value about how much the cumulative electric power can be reduced by these energy saving advices, and displaying the result on a display by graphs. In apparatuses, like televisions, which are hard to develop energy saving methods for, an energy saving action of a user can be induced according to advice, and the energy saving action of the user can be evaluated depending on the amount of electric power.

There are many apparatuses, such as rice cookers and microwave ovens, which perform the most energy saving in a state when about 80 percent of maximum usable capacity is used. However, there are apparatuses which do not perform the most energy saving in the state when about 80 percent of maximum usable capacity is used. Therefore, the optimal state for using an apparatus from the viewpoint of energy saving is sometimes not clear to the user. In contrast, in rice cookers, the energy saving advice for various setting changes are possible on the basis of the user settings, such as family members, the number of times of rice cooking, and heat retention time. The energy saving advice can be such that, recooking becomes energy saving when heat-retention time becomes long (for example, 10 hours) or freezing becomes energy saving in a home which tend to use heat retaining for a long time, is possible, and a power consumption prediction value resulting therefrom is presented to the user. The evaluation of the energy saving action is determined from the setting value of heat-retention time, the number of times of rice cooking, and the amount of rice cooking which are executed by the user.

In the microwave ovens, energy saving advices, such as performing two-stage cooking at annexed shelves, and reducing the amount of cooking from the viewpoint of caloric restriction, can be applied.

### Embodiment 7

In Embodiments 1 to 6, functions to give energy saving advices from the viewpoint of improving the operational status of apparatuses have been described. However, in Embodiment 7, a function to evaluate a user action in a case where a user does not dare to use the apparatus in a situation where the apparatus should be used, which results in energy saving, will be described.

In a related-art energy saying apparatus, it is not possible to perform energy saving evaluation when a user refrains from the use of the apparatus. In the existing apparatuses, in standby mode, functions other than the operation unit of the apparatuses are stopped for the purpose of energy saving, and only a sensing function is operating to display temperature, humidity, etc. For this reason, for example, in an air conditioner, if a user refrains from performing air conditioning even if it is hot when his/her family is not at home, the family member who has came home cannot know such a situation at all, and the others who have not used the air conditioner also cannot see an energy saving action. For this reason, the energy saving actions of a user who has refrained from performing air conditioning will not be evaluated by anyone. Additionally, the information on how much electric power charge has been saved is not fed back to the user because the air conditioner is not used. Thereby, there is a possibility that the motivation to execute ultimate energy saving by not using the air conditioner may fall.

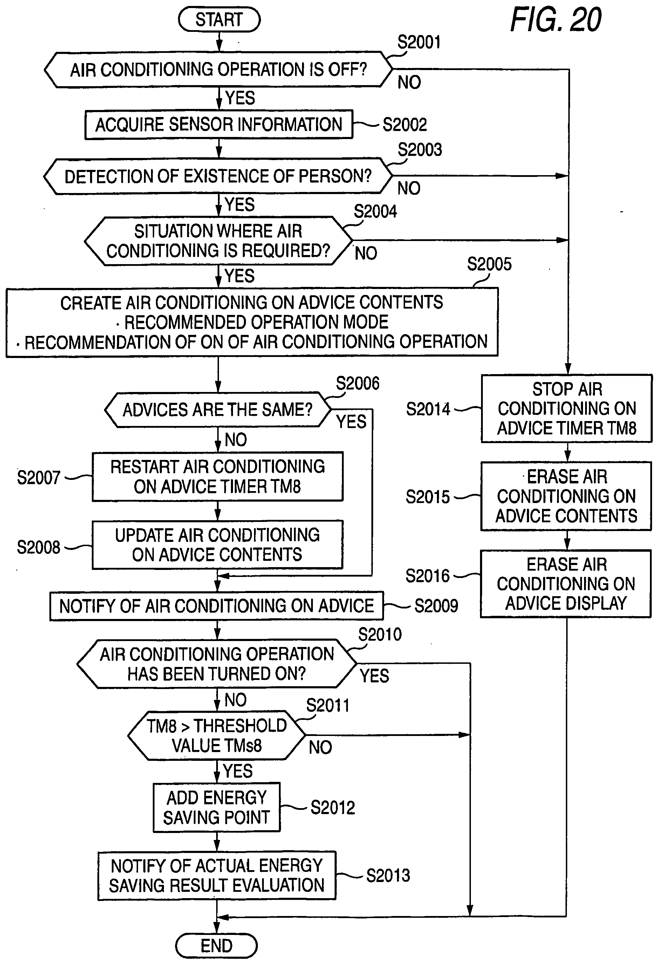

The functions of this embodiment will be described with reference to Fig. 20, taking an air conditioner as an example. In addition, the system configuration is the same as that of Embodiment 1 (Figs. 1 and 2). Fig. 20 is a view showing the operation flow of the control unit 27 of the air conditioner 1.

First, the control unit 27 investigates whether or not the air conditioner 1 is performing an air conditioning operation (S2001). If the air conditioning operation is OFF, acquirable sensor information is acquired (S2002). As sensors, there are the infrared sensor 21 provided in the indoor device 2, the outdoor temperature sensor 32 provided in the outdoor device 3, an external sensor connected via the external sensor I/F unit 26, etc. Next, it is determined whether or not a person exists indoors based on sensor information (S2003). The determination is possible by analyzing the heat pixel image measured by the infrared sensor 21 measured, as described in Embodiment 3. If a person is detected indoors, it is determined that the indoor situation is a situation where an air conditioning operation is required from the sensor information of the room temperature sensor 22, etc. (S2004). Such a situation corresponds to, for example, a case where the room temperature becomes very high, and becomes a dangerous thermal environment.

As a result of determination, if the air conditioning operation is required, air conditioning ON advice contents are created (S2005). The advice contents include turning on an operating mode to be recommended or the air conditioning operation. Next, it is determined whether or not the air conditioning ON advice contents created in the processing S2005 are the same as air conditioning ON advice contents stored in the storage unit 28 (S2006). If the above contents are not the same, a new air conditioning ON advice is created. Thus, an air conditioning ON advice timer TM8 is restarted (S2007), and the air conditioning ON advice contents stored in the storage unit 28 are updated by the air conditioning ON advice contents created in the processing S2005 (S2008). Thereafter, the created air conditioning ON advice is notified (S2009). The notification is performed by displaying the advice on the display unit 24 or the remote control display unit 51.

In contrast, if the air conditioning ON advice contents stored in the storage unit 28 and the air conditioning ON advice contents created in the processing S2005 coincide with each other immediately, the newly created air conditioning ON advice is notified (S2009).

After the notification of the advice, it is determined whether or not the air conditioning is turned on (S2010). If the air conditioning operation is turned on, the processing is completed. If the air conditioning operation is maintained in an OFF state, the value of the air conditioning ON advice timer TM8 is compared with a timer threshold value TMs8 (S2011). If TM8 > TMs8, a user refrains from the use of a predetermined air conditioner, and contributes to energy saving. Thus, the energy saving point stored in the storage unit 28 is added (S2012), and the energy saving point is notified as actual energy saving result evaluation (S2013). If TM8 ≤ TMs8, the energy saving point is not changed.

If determination is NO in any step of S2001, S2003, and S2004, this is no situation where the ON status of the air conditioning operation to be recommended. Therefore, the air conditioning ON advice timer TM8 is stopped (S2014). If there is an air conditioning ON advice during display, the contents of the air conditioning ON advice during display stored in the storage unit 28 are erased (S2015), and the air conditioning ON advice during display on the display unit 24 or the remote control display unit 51 is erased (S2016).

As described above, the function to evaluate a case where a user does not dare to use an apparatus in a situation where the apparatus should be used, which results in energy saving, is provided. Thus, there is an advantage that the user can easily execute the ultimate energy saving which does not use the apparatus.

Although the energy saving point has been used as the actual energy saving result evaluation in the above description, the cumulative power consumption, electric power charge, etc. which have been saved may be included in the notification in addition to this.

Additionally, if it is determined that the current situation is a situation where use of an apparatus is required, a function to turn on the air conditioning operation automatically without giving an advice to the user may be provided so that, if the user turns off the air conditioning operation immediately after the automatic turn-on, the energy saving point is added. This also makes it possible to evaluate that the user has refrained from using air conditioning in a situation where the air conditioning operation is required.

Although the air conditioner has been illustrated in the above example, the same means can be applied even in cases where other apparatuses are used. In the refrigerators, if an ice maker which is generally used in summer is turned off, it is not possible to take rapid measures in the case of heatstroke. Energy saving is made by advising the quantity of ice required and urging a user to perform an ice making operation. Additionally, evaluation is performed by taking an energy saving action in that consumption of power is suppressed if an ice maker is not used.

In televisions, if a person exists indoors, and there is a period during which a switch of a television is OFF, consumption of power will be suppressed by the fact that the person has not watched the television. Thus, it is possible to make an evaluation that an energy saving action has been performed. Additionally, if a human body detecting sensor or a camera is provided in a television, and it is determined that a user is not watching the television from sensor information or a camera image, the television may be automatically turned off, and if the user does not perform an ON operation immediately after the above OFF, an evaluation that an energy saving action has been performed may be made.

Additionally, since the management of television viewing time of a child can be performed from such sensor information, energy saving evaluation can be executed on the basis of indicators of whether a child has refrained from watching a desired a program, whether a predetermined television viewing time has been kept, or to what extent the user has refrained from watching a long time program, such as a movie.

### Embodiment 8

In energy saving advice functions, substantial time may be taken to calculate the prediction value of an energy saving effect and prepare an actual energy saving result evaluation of a user action. At this time, since it is unclear to a user whether or not an apparatus is normally operating, there is always a possibility that the user may misrecognize that an apparatus malfunctions or gets out of order. As the energy saving apparatus has a function to display a notification of the standby time of control by count-down, such user's misrecognition can be prevented, and user friendliness of the energy saving advice functions can be improved.

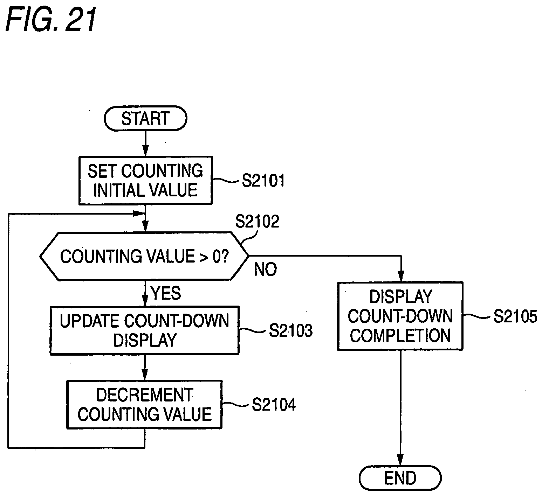

The function of this embodiment will be described taking an air conditioner as an example. The system configuration is the same as that of Embodiment 1 (Figs. 1 and 2). Fig. 21 is a view showing the operation flow of the count-down notification function.

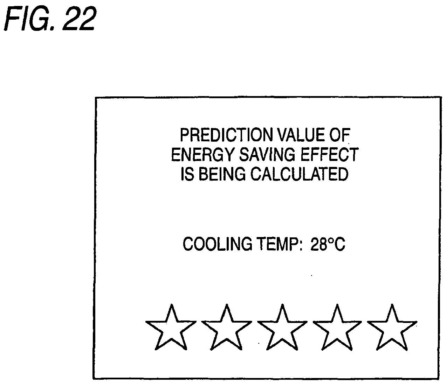

For example, a user operates the remote control 5 to request the presentation of energy saving advice based on a prediction value of an energy saving effect. The control unit 27 starts the calculation of the prediction value of the energy saving effect, and simultaneously, starts a count-down notification function. First, a count initial value is set as the timer unit 29 (S2101). The initial value shall be a positive integer value, and shall be stored in advance in the storage unit 28 as a parameter. Next, it is determined whether or not the counting value of the timer unit 29 is greater than 0 (S2102). If counting value > 0, a current counting value, or a figure or the like corresponding to the current counting value is displayed on the display unit 24 or the remote control display unit 51 (S2103). When the counting value is already under display, display is updated by the newest counting value. Fig. 22 shows an example of count-down display, and shows a case where a plurality of star marks is displayed in correspondence with the counting value. Next, the counting value is decremented according to the processing state of calculation of the prediction value of the energy saving effect (S2104). A reduction width of the counting value is determined based on the progress state of calculation processing.

On the other hand, counting value ≤ 0 in S2102 means that calculation processing has been completed. Thus, a message indicating completion of the count-down is displayed on the display unit 24 or the remote control display unit 51 (S2105), thereby completing the count-down notification function. The fact that the control unit 27 displays the prediction result of the created energy saving effect and the energy saving advice on the display unit 24 or the remote control display unit 51 are as described in Embodiment 1.

In this embodiment, since a number of star marks etc. is displayed by count-down when the prediction calculation of the energy saving advice is presented, the user's expectation can be improved. If generation of a drum roll sound and the above count-down display are used together, the effect for a user can be further enhanced.

The count-down notification function can also be applied to functions other than the energy saving advice function. For example, if defrosting of the heat exchanger of the outdoor device is performed during heating, and if the heat exchanger of the indoor device is defrosted during cooling, or the heat exchanger of the outdoor device is cooled during refrigerated air conditioning, the operation of a compressor is stopped. However, in that case, wind direction from the indoor device may be changed such that a user does not realize a temperature change. However if the user realizes the fact that the wind direction has changed suddenly and air conditioning is not being performed at all, the user feels unpleasant. In this case, the user's stress can be reduced by notification of progress state of defrosting work by the count-down notification function.

Generally, a warm wind does not come out until the air conditioner performs heat exchange when heating is started. However, if a user does not know how long he/she should wait until a warm wind comes out, and starting of heating is late, the user will be not satisfied with this. Thus, by using the count-down notification function, the user can determine that it is proper how long he/she should wait, and user's stress can be alleviated.

Additionally, when an automatic cleaning function is driven during bedtime in a case where the automatic cleaning function is annexed to the air conditioner, the user considers a cleaning sound unpleasant. Thus, when automatic cleaning setting is performed, the time of use up to the next cleaning may be displayed by the count-down notification function. Thereby, automatic cleaning can be previously performed if the automatic cleaning start time coincides with a bedtime zone.

Additionally, as an air conditioning function of the air conditioner, it is considered that, if a person comes within a certain distance from the indoor device, using the human body detecting sensor, it is determined that an air conditioning operation is required and setting of a wind direction, wind speed, setting temperature, etc. is automatically changed. For example, it is determined that a user wants to feel cool in summer and a wind direction, wind speed, setting temperature, etc. are changed to a setting which brings about cooling. However, since a sensor reacts even to a case where a person has merely passed through the interior of a room, an unneeded air conditioning operation will be performed. Thus, if it is detected that a person has approached a position within a certain distance, count-down is performed before the change control of air conditioning setting is started. Also, when a human body is not detected before count-down is completed, the change control of air conditioning setting will not be performed. By using the count-down notification function in this way, remote control operation is not required, and a comfortable air conditioning operation control which can prevent malfunctions can be performed.

Additionally, if an earthquake sensor is provided in the air conditioner, it is possible to perform the count-down of time up to the arrival of seismic waves by a voice and display. If a person is being detected by the human body detecting sensor, earthquake information may be notified by the indoor device or remote control of the air conditioner.

The count-down notification function can also be applied to other energy saving apparatuses. A function to count down whether or not the operation of an apparatus will be turned on when a person approaches the apparatus can be applied to any arbitrary apparatuses which are used when a person approaches these apparatuses, such as a lighting apparatus, an electric fan, a ventilating fan, and an electric pot, etc.

### Embodiment 9

The case where energy saving advice is presented using the sensor information collected by one energy saving apparatus has been shown in Embodiment 1. However, in this embodiment, a function to perform an energy saving advice using sensor information acquired from a plurality of energy saving apparatuses or a single sensor, which are installed in a plurality of rooms, outdoors, etc., will be described.

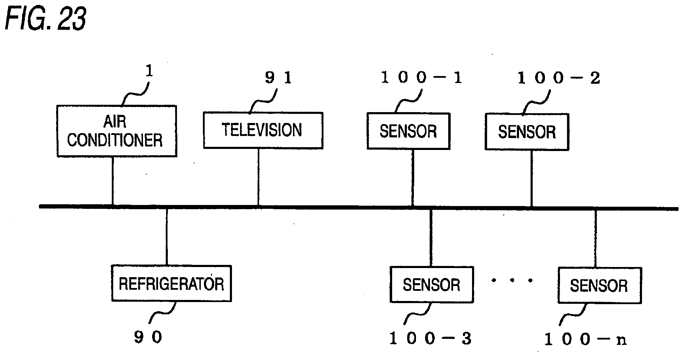

As shown in Fig. 23, a plurality of apparatuses, such as the air conditioner 1, a refrigerator 90, and a television 91, and a plurality of sensors 100-1, 100-2, 100-3, and 100-n, which is installed in respective rooms, doors, etc., are connected together using a home network 200. The home network 200 may be a wired network, a wireless network, or a network of a combined wired and wireless type. The sensor 100 may be any arbitrary sensors having a sensing function, such as a temperature humidity sensor, a human body detecting sensor, a pyroelectric sensor, and a door opening/closing detecting sensor. Each apparatus includes a communication control unit (not shown), and the sensor information measured by other apparatuses or the sensor 100 is acquired via the home network 200. Each apparatus executes energy saving advice functions on the basis of the sensor information measured by sensors provided in a main body of the apparatus, the setting information of apparatuses set by a user, and the sensor information measured by other apparatuses and the sensor 100 which are acquired via the home network 200.. The notification of energy saving advice is presented by displaying advice contents on a display device or display unit provided in each apparatus. Additionally, one apparatus may serve as a master apparatus that creates all energy saving advice, and advice contents created in other apparatuses may be transmitted to the master apparatus via a home network 200.

Hereinafter, energy saving advice functions of an air conditioner will be described as an example. In the air conditioner, a temperature sensor is installed under eaves and under a roof, and an opening/closing detecting sensor is installed in a shutter. This makes it possible to give an energy saving advice on the opening/closing of the shutter, etc. or the control of a ventilating fan so that the cold air from under the eaves (base) passes through an heat exchanger of an outdoor device in summer, and so that the warm air under the roof passes through an heat exchanger of an outdoor device in winter. Additionally, since heat accumulates in the second floor of a house in summer, an advice can be given so that attic ventilation is performed with respect to the outside from a sensing result, and air is introduced from under the floor.

Additionally, if the absence of a human body has been detected by human body detecting sensors, such as a multi-eye thermopile sensor, a pyroelectric sensor, and a camera, it is possible to give energy saving advice of OFF of an air conditioning operation. However, since a person is not in a room where the air-conditioner is installed, the user does not know even if the advice is displayed on the display unit 21 of the air conditioner. However, for example, if the user has moved to another room, the movement of the person can be detected on the basis of the sensor information from sensors installed in the room. Thereby, if it is detected that the user has moved to a room where the television 91 is installed, the user can see energy saving advice displayed on a display of the television 91 by transmitting the energy saving advice to the television 91 via the home network 200.

As described above, according to Embodiment 9, a plurality of energy saving apparatuses and a plurality of sensors can perform energy saving advice in cooperation with each other, and can perform energy saving devices corresponding to various user actions.

## Claims

1. An energy saving apparatus comprising:
a sensor which measures sensor information;
a sensor information input device which inputs the sensor information;
a setting input device which inputs setting information;
an advice creating device which creates energy saving advice based on the sensor information and the setting information; and
an advice notification device which notifies the energy saving advice to a user;
**characterized by**
an action verifying device which detects whether or not the user made an energy saving action based on the energy saving advice, based on the sensor information;
an action result evaluating device which calculates an energy saving evaluation value from the energy saving action detected by the action verifying device; and
a result evaluation notification device which notifies the energy saving evaluation value to the user.

2. The energy saving apparatus according to claim 1,
wherein the result evaluation notification device stops the notification of the energy saving advice if the action verifying device detects the energy saving action made by the user.

3. The energy saving apparatus according to claim 1 or 2,
wherein, if the setting input device inputs a signal indicating that notification contents of the energy saving advice have been confirmed, the result evaluation notification device stops the notification of the energy saving advice, and after a predetermined time has lapsed, the result evaluation notification device notifies the energy saving advice again.

4. The energy saving apparatus according to any one of claims 1 to 3, further comprising:
a predicting device which predicts cumulative power consumption when the energy saving advice of the energy saving apparatus is executed,
wherein the advice creating device creates energy saving advice based on the predicted cumulative power consumption.

5. The energy saving apparatus according to claim 4,
wherein the setting input device inputs a target value of the cumulative power consumption, and
wherein the advice creating device creates energy saving advice so that the cumulative power consumption predicted by the predicting device does not exceed the target value of the cumulative power consumption.

6. The energy saving apparatus according to claim 4,
wherein the predicting device predicts the amount of oxygen dioxide emitted from the energy saving apparatus when energy saving advice is executed, and
wherein the advice creating device creates energy saving advice based on the predicted amount of the emitted carbon dioxide.

7. The energy saving apparatus according to claim 6,
wherein the setting input device inputs a target value of the amount of the emitted carbon dioxide,
and wherein the advice creating device creates energy saving advice so that the amount of the emitted carbon dioxide predicted by the predicting device does not exceed the target value of the amount of the emitted carbon dioxide.

8. The energy saving apparatus according to claim 4,
wherein the setting input device inputs a target amount of money of a saved amount of money of an electric power charge, and
wherein the advice creating device creates the energy saving advice so that the saved amount of money of the electric power charge, which is to be saved when energy saving advice is executed, does not fall below the target amount of money of the saved amount of money.

9. The energy saving apparatus according to claim 1,
wherein the advice creating device creates energy saving advice which recommends use of the energy saving apparatus, and
wherein if the action verifying device has not detected the use of the energy saving apparatus, the action result evaluating device executes additional processing of the energy saving evaluation value.

10. The energy saving apparatus according to claim 1, further comprising a count-down notification device which notifies the progress state of processing during execution by count-down.

11. The energy saving apparatus according to claim 1, further comprising:
a communication control unit that includes a function for connecting the energy saving device to a home network,
wherein the advice creating device creates the energy saving advice based on the sensor information, the setting information and sensor information acquired by the communication control unit via the home network.

12. The energy saving apparatus according to claim 1,
wherein the sensor comprises a temperature sensor, and
wherein the sensor information is a measurement value measured by the temperature sensor.

13. The energy saving apparatus according to claim 1,
wherein the sensor comprises a pressure sensor, and
wherein the sensor information is a measurement value measured by the pressure sensor.

14. The energy saving apparatus according to claim 1,
wherein the sensor comprises an infrared sensor, and
wherein the sensor information is a measurement value measured by the infrared sensor.

15. The energy saving apparatus according to claim 1,
wherein the sensor comprises a human body detecting sensor, and
wherein the sensor information is a measurement value measured by the human body detecting sensor.

16. The energy saving apparatus according to claim 1, further comprising:
a motor, wherein the sensor information is a measurement value showing an operating state of the motor.

17. The energy saving apparatus according to any one claims 1 to 16,
wherein the energy saving apparatus is an air conditioner.

18. The energy saving apparatus according to any one claims 1 to 16,
wherein the energy saving apparatus is a refrigerator.

19. An air conditioner comprising:
an outdoor device;
an indoor device, which is connected to the outdoor device via a pipe, and which performs bidirectional communication with a remote control;
an advice creating device which creates energy saving advice based on sensor information measured by a sensor installed in the indoor device or the outdoor device, and setting information received from the remote control;
an advice notifying device which displays the energy saving advice on a first display unit provided in the indoor unit or a second display unit provided in the remote control to a user; **characterized by**
an action verifying device which detects whether or not the user made an energy saving action based on the energy saving advice,;
an action result evaluating device which calculates an energy saving evaluation value from the energy saving action detected by the action verifying device; and
a result evaluation notification device which display the energy saving evaluation value on the first display unit or the second display unit to the user.

20. The air conditioner according to claim 19, further comprising:
a predicting device which predicts cumulative power consumption when energy saving advice is executed,
wherein the advice creating device creates energy saving advice based on the predicted cumulative power consumption.

21. The air conditioner according to claim 19 or 20, further comprising:
a communication control unit that includes a function for connecting the air conditioner to a home network,
wherein the advice creating device creates the energy saving advice based on the sensor information, the setting information and sensor information acquired by the communication control unit via the home network.

## Patentansprüche

1. Eine Energiesparvorrichtung umfassend:
einen Sensor, der Sensorinformationen misst;
ein Sensorinformationseingabegerät, das die Sensorinformationen eingibt;
ein Einstellungseingabegerät, das Einstellungsinformationen eingibt;
ein Hinweiserzeugungsgerät, das einen Energiesparhinweis basierend auf den Sensorinformationen und den Einstellungsinformationen erzeugt; und
ein Hinweismitteilungsgerät, das den Energiesparhinweis an einen Benutzer mitteilt;
**gekennzeichnet durch**
ein Tätigkeitsverifikationsgerät, das detektiert, ob oder ob nicht der Benutzer eine Energiespartätigkeit basierend auf dem Energiesparhinweis durchgeführt hat, basierend auf den Sensorinformationen;
ein Tätigkeitsergebnisbewertungsgerät, das einen Energiesparbewertungswert aus der Energiespartätigkeit, die durch das Tätigkeitsverifikationsgerät detektiert wird, berechnet; und
ein Ergebnisbewertungsmitteilungsgerät, das dem Benutzer den Energiesparbewertungswert mitteilt.

2. Die Energiesparvorrichtung gemäß Anspruch 1,
wobei das Ergebnisbewertungsmitteilungsgerät die Mitteilung des Energiesparhinweises stoppt, wenn das Tätigkeitsverifikationsgerät die durch den Benutzer gemachte Energiespartätigkeit detektiert.

3. Die Energiesparvorrichtung gemäß Anspruch 1 oder Anspruch 2,
wobei, wenn das Einstellungseingabegerät ein Signal eingibt, das angibt, dass Mitteilungsinhalte des Energiesparhinweises bestätigt worden sind, das Ergebnisbewertungsmitteilungsgerät die Mitteillung des Energiesparhinweises stoppt, und, nachdem eine vorbestimmte Zeit vergangen ist, das Ergebnisbewertungsmitteilungsgerät den Energiesparhinweis erneut mitteilt.

4. Die Energiesparvorrichtung gemäß einem der Ansprüche 1 - 3, darüber hinaus umfassend:
ein Vorhersagegerät, das einen kumulativen Energieverbrauch vorhersagt, wenn der Energiesparhinweis der Energiesparvorrichtung ausgeführt wird,
wobei das Hinweiserzeugungsgerät einen Energiesparhinweis basierend auf dem vorhergesagten kumulativen Energieverbrauch erzeugt.

5. Die Energiesparvorrichtung gemäß Anspruch 4,
wobei das Einstellungseingabegerät einen Zielwert des kumulativen Energieverbrauchs eingibt, und
wobei das Hinweiserzeugungsgerät einen Energiesparhinweis so erzeugt, dass der kumulative Energieverbrauch, der durch das Vorhersagegerät vorhergesagt wird, den Zielwert des kumulativen Energieverbrauchs nicht überschreitet.

6. Die Energiesparvorrichtung gemäß Anspruch 4,
wobei das Vorhersagegerät die Menge von Sauerstoffdioxid, die von der Energiesparvorrichtung emittiert wird, vorhersagt, wenn ein Energiesparhinweis ausgeführt wird, und
wobei das Hinweiserzeugungsgerät einen Energiesparhinweis basierend auf der vorhergesagten Menge des emittierten Kohlendioxids erzeugt.

7. Die Energiesparvorrichtung gemäß Anspruch 6,
wobei das Einstellungseingabegerät einen Zielwert der Menge von dem emittierten Kohlendioxid eingibt, und
wobei das Hinweiserzeugungsgerät einen Energiesparhinweis so erzeugt, dass die durch das Vorhersagegerät vorhergesagte Menge des emittierten Kohlendioxids den Zielwert der Menge des emittierten Kohlendioxids nicht überschreitet.

8. Die Energiesparvorrichtung gemäß Anspruch 4,
wobei das Einstellungseingabegerät einen Zielwert an Geld von einer gesparten Menge an Geld einer Gebühr für eine elektrische Leistung eingibt, und
wobei das Hinweiserzeugungsgerät den Energiesparhinweis so erzeugt, dass die gesparte Menge an Geld der Gebühr für eine elektrische Leistung, die zu sparen ist, wenn ein Energiesparhinweis ausgeführt wird, nicht unter den Zielwert an Geld der gesparten Menge an Geld fällt.

9. Die Energiesparvorrichtung gemäß Anspruch 1,
wobei das Hinweiserzeugungsgerät einen Energiesparhinweis, der eine Verwendung der Energiesparvorrichtung empfiehlt, erzeugt, und
wobei, wenn das Tätigkeitsverifikationsgerät die Verwendung der Energiesparvorrichtung nicht detektiert hat, das Tätigkeitsergebnisbewertungsgerät eine zusätzliche Verarbeitung des Energiesparbewertungswerts ausführt.

10. Die Energiesparvorrichtung gemäß Anspruch 1, darüber hinaus umfassend ein Countdown-Mitteilungsgerät, das den Fortschrittszustand einer Verarbeitung während einer Ausführung durch einen Countdown mitteilt.

11. Die Energiesparvorrichtung gemäß Anspruch 1, darüber hinaus umfassend:
eine Kommunikationssteuereinheit, die eine Funktion zum Verbinden des Energiespargeräts mit einem Heimnetzwerk umfasst,
wobei das Hinweiserzeugungsgerät den Energiesparhinweis basierend auf den Sensorinformationen, den Einstellungsinformationen und von Sensorinformationen, die durch die Kommunikationssteuereinheit über das Heimnetzwerk akquiriert werden, erzeugt.

12. Die Energiesparvorrichtung gemäß Anspruch 1,
wobei der Sensor einen Temperatursensor umfasst, und
wobei die Sensorinformationen einem gemessenen Wert, der durch den Temperatursensor gemessen wird, entsprechen.

13. Die Energiesparvorrichtung gemäß Anspruch 1,
wobei der Sensor einen Drucksensor umfasst, und
wobei die Sensorinformationen einem vermittels des Drucksensors gemessenen Messwert entsprechen.

14. Die Energiesparvorrichtung gemäß Anspruch 1,
wobei der Sensor einen Infrarotsensor umfasst, und
wobei die Sensorinformationen einem durch den Infrarotsensor gemessenen Messwert entsprechen.

15. Die Energiesparvorrichtung gemäß Anspruch 1,
wobei der Sensor einen Menschlicher-Körper-Detektionssensor umfasst, und
wobei die Sensorinformationen einem Messwert, der durch den Menschlicher-Körper-Detektionssensor gemessen wird, entsprechen.

16. Die Energiesparvorrichtung gemäß Anspruch 1, darüber hinaus umfassend:
einen Motor, wobei die Sensorinformationen einem Messwert entsprechen, der einen Betriebszustand des Motors anzeigt.

17. Die Energiesparvorrichtung gemäß einem der Ansprüche 1 - 16, wobei die Energiesparvorrichtung ein Klimagerät ist.

18. Die Energiesparvorrichtung gemäß einem der Ansprüche 1 - 16, wobei die Energiesparvorrichtung ein Kühlgerät ist.

19. Ein Klimagerät umfassend:
ein Außengerät;
ein Innengerät, das mit dem Außengerät über eine Leitung verbunden ist und das eine bidirektionale Kommunikation mit einer Fernsteuerung durchführt;
ein Hinweiserzeugungsgerät, das einen Energiesparhinweis erzeugt basierend auf Sensorinformationen gemessen durch einen Sensor, der in dem Innengerät oder dem Außengerät installiert ist, und Einstellungsinformationen empfangen von der Fernsteuerung;
ein Hinweismitteilungsgerät, das den Energiesparhinweis auf einer ersten Anzeigeeinheit, die in der Inneneinheit vorgesehen ist, oder einer zweiten Anzeigeeinheit, die in der Fernsteuerung vorgesehen ist, einem Benutzer anzeigt,
**gekennzeichnet durch**
ein Tätigkeitsverifikationsgerät, das detektiert, ob oder ob nicht der Benutzer eine Energiespartätigkeit durchgeführt hat basierend auf dem Energiesparhinweis;
ein Tätigkeitsergebnisbewertungsgerät, das einen Energiesparbewertungswert aus der Energiespartätigkeit, die durch das Tätigkeitsverifikationsgerät detektiert wird, berechnet, und
ein Ergebnisbewertungsmitteilungsgerät, das den Energiesparbewertungswert auf der ersten Anzeigeeinheit oder der zweiten Anzeigeeinheit dem Benutzer anzeigt.

20. Das Klimagerät gemäß Anspruch 19, darüber hinaus umfassend:
ein Vorhersagegerät, das einen kumulativen Energieverbrauch vorhersagt, wenn ein Energiesparhinweis ausgeführt wird,
wobei das Hinweiserzeugungsgerät einen Energiesparhinweis basierend auf dem vorhergesagten kumulativen Energieverbrauch erzeugt.

21. Das Klimagerät gemäß Anspruch 19 oder Anspruch 20, darüber hinaus umfassend:
eine Kommunikationssteuereinheit, die eine Funktion zum Verbinden des Klimageräts mit einem Heimnetzwerk umfasst,
wobei das Hinweiserzeugungsgerät den Energiesparhinweis basierend auf den Sensorinformationen, den Einstellungsinformationen und von Sensorinformationen, die durch die Kommunikationssteuereinheit über das Heimnetzwerk akquiriert werden, erzeugt.

## Revendications

1. Appareil permettant d'économiser l'énergie comprenant :
un capteur qui mesure des informations de capteur ;
un dispositif d'entrée d'informations de capteur qui permet d'entrer les informations du capteur ;
un dispositif d'entrée de réglage qui permet d'entrer des informations de réglage ;
un dispositif de création de conseils qui crée un conseil relatif à l'économie d'énergie sur la base des informations du capteur et des informations de réglage ; et
un dispositif de notification de conseils qui donne à un utilisateur des conseil en matière d'économie d'énergie ;
**caractérisé par** :
un dispositif de vérification d'actions qui détecte si l'utilisateur a procédé ou non à une action d'économie d'énergie sur la base des conseils relatifs à l'économie d'énergie, sur la base des informations transmises par le capteur ;
un dispositif d'évaluation du résultat des action qui calcule une valeur d'évaluation d'économie d'énergie à partir de l'action d'économie d'énergie détectée par le dispositif de vérification des actions ; et
un dispositif de notification des évaluations de résultats qui notifie à l'utilisateur la valeur d'évaluation d'économie d'énergie.

2. Appareil permettant d'économiser l'énergie selon la revendication 1,
dans lequel le dispositif de notification d'évaluation de résultats met fin à la notification de conseils relatifs à l'économie d'énergie si le dispositif de vérification des actions détecte l'action d'économie d'énergie exécutée par l'utilisateur.

3. Appareil permettant d'économiser l'énergie selon la revendication 1 ou la revendication 2,
dans lequel, si le dispositif d'entrée de réglage permet d'entrer un signal indiquant que des contenus de notification du conseil relatif à l'économie d'énergie ont été confirmés, le dispositif de notification d'évaluation des résultats met fin à la notification du conseil relatif à l'économie d'énergie, et après qu'une période de temps prédéterminée s'est écoulée, le dispositif de notification d'évaluation des résultats notifie de nouveau le conseil en matière d'économie d'énergie.

4. Appareil permettant d'économiser l'énergie selon l'une quelconque des revendications 1 à 3, comprenant en outre :
un dispositif de prédiction qui prédit une consommation d'énergie cumulée lorsque le conseil relatif à l'économie d'énergie de l'appareil permettant d'économiser l'énergie, est suivi ;
dans lequel le dispositif de création de conseils crée un conseil relatif à l'économie d'énergie sur la base de la consommation d'énergie cumulée prédite.

5. Appareil permettant d'économiser l'énergie selon la revendication 4,
dans lequel le dispositif d'entrée de réglages permet d'entrer une valeur cible de la consommation d'énergie cumulée ; et
dans lequel le dispositif de création de conseils crée un conseil relatif à l'économie d'énergie de telle sorte que la consommation d'énergie cumulée prédite par le dispositif de prédiction, ne dépasse pas la valeur cible de la consommation d'énergie cumulée.

6. Appareil permettant d'économiser l'énergie selon la revendication 4,
dans lequel le dispositif de prédiction prédit la quantité de dioxyde d'oxygène émise par l'appareil permettant d'économiser l'énergie, lorsque le conseil en matière d'économie d'énergie est suivi ; et
dans lequel le dispositif de création de conseils crée un conseil relatif à l'économie d'énergie sur la base de la quantité prédite de dioxyde de carbone émis.

7. Appareil permettant d'économiser l'énergie selon la revendication 6,
dans lequel le dispositif d'entrée de réglage permet d'entrer une valeur cible de la quantité de dioxyde de carbone émis ;
et dans lequel le dispositif de création de conseils crée un conseil relatif à l'économie d'énergie de telle sorte que la quantité de dioxyde de carbone émis prédite par le dispositif de prédiction, ne dépasse pas la valeur cible de la quantité de dioxyde de carbone émis.

8. Appareil permettant d'économiser l'énergie selon la revendication 4,
dans lequel le dispositif d'entrée de réglages permet d'entrer une somme d'argent cible correspondant à la somme d'argent économisée sur une facture d'électricité ; et
dans lequel le dispositif de création de conseils crée le conseil relatif à l'économie d'énergie de telle sorte que la somme d'argent économisée sur la facture d'électricité, qui doit être épargnée lorsque le conseil relatif à l'économie d'énergie est suivi, ne soit pas inférieure à la somme d'argent cible de la somme d'argent épargnée.

9. Appareil permettant d'économiser l'énergie selon la revendication 1,
dans lequel le dispositif de création de conseils crée le conseil relatif à l'économie d'énergie qui recommande l'utilisation de l'appareil permettant d'économiser l'énergie ; et
dans lequel, si le dispositif de vérification d'actions n'a pas détecté l'utilisation de l'appareil permettant d'économiser l'énergie, le dispositif d'évaluation du résultat des actions exécute un traitement supplémentaire de la valeur d'évaluation d'économie d'énergie.

10. Appareil permettant d'économiser l'énergie selon la revendication 1, comprenant en outre un dispositif de notification de décomptage qui notifie par un décompte l'état de progression du traitement au cours de son exécution.

11. Appareil permettant d'économiser l'énergie selon la revendication 1, comprenant en outre :
une unité de commande de communication qui comprend une fonction destinée à relier le dispositif permettant d'économiser l'énergie à un réseau domestique ;
dans lequel le dispositif de création de conseils crée le conseil relatif à l'économie d'énergie sur la base des informations du capteur, des informations de réglage et des informations du capteur acquises par l'unité de commande de communication par l'intermédiaire du réseau domestique.

12. Appareil permettant d'économiser l'énergie selon la revendication 1,
dans lequel le capteur comprend un capteur de température ; et
dans lequel les informations du capteur sont une valeur de mesure mesurée par le capteur de température.

13. Appareil permettant d'économiser l'énergie selon la revendication 1,
dans lequel le capteur comprend un capteur de pression ; et
dans lequel les informations du capteur sont une valeur de mesure mesurée par le capteur de pression.

14. Appareil permettant d'économiser l'énergie selon la revendication 1,
dans lequel le capteur comprend un capteur infrarouge ; et
dans lequel les informations du capteur sont une valeur de mesure mesurée par le capteur infrarouge.

15. Appareil permettant d'économiser l'énergie selon la revendication 1,
dans lequel le capteur comprend un capteur de détection d'un corps humain ; et
dans lequel les informations du capteur sont une valeur de mesure mesurée par le capteur de détection d'un corps humain.

16. Appareil permettant d'économiser l'énergie selon la revendication 1, comprenant en outre :
un moteur, dans lequel les informations du capteur sont une valeur de mesure qui représente un état de fonctionnement du moteur.

17. Appareil permettant d'économiser l'énergie selon l'une quelconque des revendications 1 à 16,
dans lequel l'appareil permettant d'économiser l'énergie est un climatiseur.

18. Appareil permettant d'économiser l'énergie selon l'une quelconque des revendications 1 à 16,
dans lequel l'appareil permettant d'économiser l'énergie est un réfrigérateur.

19. Climatiseur comprenant :
un dispositif extérieur ;
un dispositif intérieur, qui est relié au dispositif extérieur par l'intermédiaire d'une canalisation, et qui exécute une communication bidirectionnelle avec une télécommande ;
un dispositif de création de conseils qui crée un conseil en matière d'économie d'énergie sur la base des informations du capteur mesurées par un capteur installé dans le dispositif intérieur ou dans le dispositif extérieur, et des informations de réglage reçues en provenance de la télécommande ;
un dispositif de notification de conseils qui affiche à l'intention d'un utilisateur, le conseil relatif à l'économie d'énergie sur une première unité d'affichage prévue dans l'unité intérieure, ou sur une seconde unité d'affichage prévue dans la télécommande ;
**caractérisé par** :
un dispositif de vérification d'actions qui détecte si l'utilisateur a procédé ou non à une action d'économie d'énergie sur la base du conseil relatif à l'économie d'énergie ;
un dispositif d'évaluation du résultat des actions qui calcule une valeur d'évaluation d'économie d'énergie à partir de l'action d'économie d'énergie détectée par le dispositif de vérification des actions ; et
un dispositif de notification d'évaluation des résultats qui affiche à l'intention de l'utilisateur la valeur d'évaluation économie d'énergie sur la première unité d'affichage ou sur la seconde unité d'affichage.

20. Climatiseur selon la revendication 19, comprenant en outre :
un dispositif de prédiction qui prédit la consommation d'énergie cumulée lorsque le conseil en matière d'économie d'énergie est suivi ;
dans lequel le dispositif de création de conseils crée un conseil relatif à l'économie d'énergie sur la base de la consommation d'énergie cumulée prédite.

21. Climatiseur selon la revendication 19 ou la revendication 20, comprenant en outre :
une unité de commande de communication qui comprend une fonction destinée à relier le climatiseur à un réseau domestique ;
dans lequel le dispositif de création de conseils crée le conseil relatif à l'économie d'énergie sur la base des informations du capteur, des informations de réglage et des informations de capteur acquises par l'unité de commande de communication par l'intermédiaire du réseau domestique.
